# EUROPÄISCHE PATENTSCHRIFT

(11) **EP 1 510 067 B1**
(45) Veröffentlichungstag und Bekanntmachung des Hinweises auf die Patenterteilung: **13.08.2014**
(21) Anmeldenummer: 03732520.6
(22) Anmeldetag: 02.06.2003
(51) Int. Cl.: H04N 5/44

(54) **VERFAHREN UND SCHALTUNGSANORDUNG ZUM MEHRWEGEEMPFANG**
METHOD AND CIRCUIT FOR MULTIPATH RECEPTION
PROCEDE ET MONTAGE DE RECEPTION A PLUSIEURS VOIES

(30) Priorität: 31.05.2002 DE 10224536
(43) Veröffentlichungstag der Anmeldung: 02.03.2005
(73) Patentinhaber: Harman Becker Automotive Systems GmbH, 76307 Karlsbad (DE)
(72) Erfinder: TEICHNER, Detlef, 78126 Königsfeld (DE); LINK, Hermann, 78166 Donaueschingen (DE); WÖHRLE, Philipp, 78098 Triberg (DE)
(74) Vertreter: Grünecker, Kinkeldey, Stockmair & Schwanhäusser
(86) Internationale Anmeldenummer: PCT/EP2003/005759
(87) Internationale Veröffentlichungsnummer: WO 2003/103280

(56) Entgegenhaltungen:
- EP-A- 1 162 836
- EP-A2- 0 935 385
- WO-A-01/19075
- DE-A- 19 929 284
- US-A- 5 303 396
- US-A- 5 940 452
- US-A- 6 005 605
- US-A1- 2001 006 535

## Beschreibung

Die Erfindung betrifft ein Verfahren zum Mehrwegeempfang von Fernsehsignalen gemäß den Merkmalen des Oberbegriffs des Anspruchs 1 sowie eine geeignete Schaltungsanordnung hierfür gemäß den Merkmalen des Oberbegriffs des Anspruchs 25.

Unter Mehrwegeempfang wird der Empfang von Funksignalen auf einem von mehreren Übertragungswegen oder -kanälen verstanden.

Bekannt ist der Mehrwegeempfang von Radio- und/oder Fernsehsignalen mittels einer von mehreren alternativen Antennen, was als Antennendiversity bezeichnet wird, und auf einer von mehreren alternativen Empfangsfrequenzen, was unter dem Begriff Frequenzdiversity verstanden wird.

Eine Antennendiversity-Empfangsanlage ist eine Funkempfangsanlage mit einem Funkempfänger, der an eine von mehreren, meist räumlich getrennten Antennen, anschließbar ist. Derartige Antennendiversity-Empfangsanlagen werden z.B. in Kraftfahrzeugen zum Empfang von Radio- und/oder Fernsehsignalen eingesetzt. Als Antennen dienen in Kraftfahrzeugen bevorzugt Scheibenantennen, die beispielsweise in die Scheiben des Kraftfahrzeuges integriert sind. Bei Betrieb der Antennendiversity-Empfangsanlage, beispielsweise eine Rundfunkempfangsanlage, eine Fernsehempfangsanlage oder eine Telefonanlage, wählt eine Auswahlschaltung nach vorgebbaren Kriterien eine der Antennen zum Anschließen an den Funkempfänger aus.

Derartige Kriterien sind z. B. die Empfangsfeldstärke oder die bei höheren Empfangsfeldstärken auftretenden Interferenzstörungen, die beispielsweise durch störenden Mehrwegeempfang infolge von Signalreflexionen verursacht werden können. Es wird dann möglichst schnell auf eine andere Antenne umgeschaltet, die Empfangssignale mit einer besseren Empfangsqualität liefert.

DE 199 29 284 A1 offenbart ein Verfahren zum mobilen Empfang von Rundfunksignalen, insbesondere von Fernsehsignalen, bei dem aus n unterschiedlichen Eingangssignalen ein Ausgangssignal abgeleitet und in einem Empfänger wiedergegeben wird. Dieses Verfahren sieht vor, die n Eingangssignale zu gewichten und das Ausgangssignal durch Summation der gewichteten Eingangssignale zu bilden, wobei zur Bestimmung der adaptiv ermittelten Gewichtungsfaktoren die Qualität jedes der n Eingangssignale anhand wenigstens eines vorgebbaren Kriteriums bewertet wird.

WO 01/19075 A2 offenbart ein Verfahren zur Verringerung von Mehrwegverzerrungen in einem Fernsehsignal, welches die folgenden Schritte umfasst: Empfangen einer Vielzahl von Signalen ein und desselben Fernsehsignals, die über verschiedene Wege zu den jeweiligen Empfänger gelangen; Kombinieren dieser Vielzahl von Signalen, um ein kombiniertes Signal zu erzeugen; und Demodulieren des kombinierten Signals. Der Schritt des Kombinierens erfolgt dabei durch: Gewichten jedes Signals mit einem Gewichtungsfaktor, um eine Vielzahl von gewichteten Signalen zu erzeugen; Summieren der Vielzahl von gewichteten Signalen, um das kombinierte Signal zu erzeugen; Verarbeiten des kombinierten Signals, um einen Gütefaktor abzuleiten; und Steuern der Gewichtungsfaktoren mit Hilfe eines adaptiven Algorithmus, der den Gütefaktor als Eingabe verwendet.

EP 0935385A2 beschreibt einen Empfänger, welcher aufweist: eine Datendekodiereinrichtung zum Decodieren von digitalen Videodaten, die über eine erste Antenne empfangen werden, um erste Videodaten zu erhalten; eine Dekodiereinrichtung zum Dekodieren von analogen Videodaten, die über eine zweite Antenne empfangen werden, um zweite Videodaten zu erhalten; eine Digitalisierungseinrichtung zum Digitalisieren der zweiten (analogen) Videodaten; eine erste Bildformat-Wandlereinrichtung zum Umwandeln der ersten Videodaten in erste Format-konvertierte Videodaten; eine zweite Bildformat-Wandlereinrichtung zum Umwandeln der zweiten Videodaten in zweite Format-konvertierte Videodaten; eine Bild-in-Bild-Mischeinrichtung zum Mischen der ersten Format-konvertierten Videodaten und der zweiten Format-konvertierten Videodaten, um Videodaten in Bild-in-Bild-Form zu erhalten; und einen Ausgang zum Ausgeben der in Bild-in-Bild-Form dargestellten Videodaten.

Eine Frequenzdiversity-Empfangsanlage ist eine Funkempfangsanlage mit mindestens zwei Funkempfängem. Der eine Funkempfänger dient als Betriebsempfänger, während der andere Funkempfänger als Such- und Prüfempfänger alternative Empfangsfrequenzen sucht und deren Empfangsqualität prüft. Findet der Suchempfänger eine alternative Empfangsfrequenz, die eine bessere Empfangsqualität bietet als die augenblicklich beim Betriebsempfänger eingestellte Empfangsfrequenz, so wird entweder der Betriebsempfänger auf die neue gefundene Empfangsfrequenz abgestimmt oder der Such- und der Betriebsempfänger tauschen ihre Rollen. Der Suchempfänger bleibt dann auf die gefundene optimale Empfangsfrequenz abgestimmt und übernimmt die Aufgabe des bisherigen Betriebsempfängers, der jetzt als Suchempfänger alternative Empfangsfrequenzen sucht und deren Empfangsqualität prüft.

Ebenso wie Antennendiversity-Empfangsanlagen sind auch Frequenzdiversity-Empfangsanlagen besonders für Kraftfahrzeuge geeignet, weil sich während der Fahrt infolge der sich ständig ändernden Form des Geländes auch die Empfangsverhältnisse ändern können.

Besonders vorteilhaft ist eine Kombination aus Antennen- und Frequenzdiversity.

Bei einer derartigen kombinierten Diversity-Empfangsanlage sind mehrere Antennen vorgesehen, die mittels einer Auswahlschaltung an mehrere Empfänger angeschlossen werden können. Es lassen sich daher beliebige Antennen-Frequenz-Kombinationen realisieren.

Mittlerweile sind darüber hinaus neben den Empfangsanlagen zum Empfang von analogen Rundfunksignalen auch Empfangsanlagen zum Empfang von digital ausgestrahlten Rundfunksignalen im Einsatz. Die digitalen Empfangsanlagen werden zukünftig noch mehr an Bedeutung gewinnen, weil immer mehr Rundfunkanstalten dazu übergehen ihre Sendungen digital auszustrahlen. Dies gilt nicht nur für Radiosendungen, die zum Teil bereits digital ausgestrahlt werden, sondern zunehmend auch für Fernsehsendungen, die digital ausgestrahlt werden. Pilotprojekte, die digitales Fernsehen ausstrahlen, sind mittlerweile bekannt. Das digitale Fernsehen ist unter der Bezeichnung DVB-T "Digital Video Broadcasting Terrestrial" bekannt.

Für den Empfang dieser DVBT-Signale sind spezielle digitale Empfangsanlagen erforderlich. Die herkömmlichen Empfangsgeräte sind hierfür nicht geeignet.

Da das digitale Fernsehen zunehmend das analoge Fernsehen ablösen soll, jedoch die Verbreitung des digitalen Fernsehens nicht von heute auf morgen flächendeckend möglich sein wird, sind insbesondere bei mobilen TV-Empfängern, wie diese zunehmend in Kraftfahrzeugen eingebaut werden, Empfangskonzepte erforderlich, die sowohl analoge Rundfunksignale als auch digitale Rundfunksignale und insbesondere analoge Fernsehsignale und digitale Fernsehsignale verarbeiten können.

Hier setzt die vorliegende Erfindung an.

Es ist Aufgabe der Erfindung, ein Verfahren und eine Schaltungsanordnung zum Mehrwegeempfang von Rundfunksignalen und insbesondere Fernsehsignalen so zu gestalten, dass ein Wiedergabesignal mit einer erheblich verbesserten Qualität als bei herkömmlichen Diversity-Empfangsanlagen erzeugt wird.

Diese Aufgabe wird verfahrensmäßig durch die Merkmale des Anspruchs 1 gelöst.

Eine Schaltungsanordnung, welche die Aufgabe löst, ist Gegenstand des Anspruchs 23.

Weiterbildungen der Erfindung sind Gegenstand der auf diese beiden Ansprüche zurückbezogenen Unteransprüche.

Erfindungsgemäß wird demnach ein Verfahren und eine Schaltungsanordung zum Mehrwegeempfang von Rundfunksignalen mittels mindestens zweier Empfänger und mindestens einer Antenne vorgestellt. Einer der Empfänger empfängt und verarbeitet bevorzugt analoge Fernsehbildsignale und ein anderer der Empfänger empfängt und verarbeitet bevorzugt digitale Fernsehbildsignale. Das empfangene analoge Fernsehbildsignal wird digitalisiert und mit dem digitalen Fernsehbildsignal in einer Diversitätseinheit so miteinander gewichtet addiert, dass entweder jeweils das qualitativ bessere der beiden Signale oder eine Kombination beider Signale in einer Ausgabeeinheit ausgegeben wird.

Wenn hierbei davon die Rede ist, dass Fernsehbildsignale verarbeitet werden, so ist im Rahmen dieser Erfindung darunter die Verarbeitung von nur Bildsignalen als auch die Verarbeitung von Bild- und Tonsignalen (also Audiosignalen) zu verstehen.

Vorzugsweise sind mehrere Empfänger für den Empfang von analogen Signalen und mehrere Empfänger zum Empfang der digitalen Signale vorgesehen, wobei in jedem der analogen und digitalen Signalpfade das jeweils qualitativ bessere analoge Signal und qualitativ bessere digitale Signal weiterverarbeitet und der gewichteten Addition zugeführt werden.

Bevorzugt wird auch das jeweils bessere Tonsignal aus beiden Signalzweigen dem ausgegebenen Videosignal zugeordnet.

Bevorzugt erfolgt die gewichtete Addition der beiden Signale im Frequenz- und/oder Zeitbereich. Die Gewichtung kann dabei quantisiert erfolgen. Dies bedeutet, dass das aus dem empfangenen analogen Empfangssignal gewonnene digitalisierte Signal, je nach dessen Qualität, zu 100% oder 0% oder mit Werten dazwischen dem aus dem empfangenen digitalen Empfangssignal gewonnenen Signal hinzugefügt werden kann. Ist das Signal aus dem digitalen Signalweg optimal und das Signal aus dem analogen Signalpfad stark gestört, so wird erfindungsgemäß das digitale Signal mit 1 multipliziert und das analoge Signal mit dem Faktor 0. Ergebnis ist, dass das digitale Signal zur Darstellung gebracht wird. Im umgekehrten Fall, d.h. wenn das analoge Signal optimal und das digitale Signal gestört ist, so wird das analoge Signal mit 1 gewichtet und das digitale Signal mit 0. Werte zwischen 1 und 0 sind ebenfalls möglich; Ziel ist jedoch jedes mal, dem Wiedergabegerät das jeweils bessere Signal zuzuführen oder ein Kombinationssignal, das besser ist als jedes Einzelsignal ist. Die gewichtete Addition wird dabei von einer Diversitätseinheit durchgeführt. Das Umschalten von dem einen Signal zum anderen Signal oder zu dem Kombinationssignal erfolgt dabei bevorzugt zeitabschnittsweise, weil sich in aufeinanderfolgenden Zeitabschnitten die Empfangsverhältnisse ändern können.

Die Kombination bzw. Diversity kann jedoch auch zwischen Chrominanzsignal und Luminanzsignal erfolgen. Ist z.B. im digitalen Signalweg aufgrund von Störungen lediglich für eine Bitgruppe - z.B. 8x8 Bildpunkte - nur noch die Farbinformation dekodierbar - z.B. gelb - so kann möglicherweise über den analogen Signalweg noch eine schwarzweiß Bildstruktur detektierbar sein. In der Diversitätseinheit wird erfindungsgemäß eine gewichtete Addition derart durchgeführt, dass die Farbinformation gelb mit der Bildstrukturinformation kombiniert wird. Ergebnis ist eine Bildstruktur, die mehr oder weniger gelb eingefärbt ist. Insgesamt wird am Bildschirm für diesen Bildbereich ein verbesserter Bildausschnitt dargestellt.

Eine weitere Möglichkeit der Signalkombination bzw. gewichteten Addition der Signale kann im Frequenzbereich stattfinden. Hierunter ist zu verstehen, dass die niederfrequenten Signalanteile aus dem einen, z.B. digitalen Signalweg und mit den höherfrequenten Signalanteilen aus dem anderen, z.B. analogen Signalweg miteinander kombiniert werden oder umgekehrt.

In einer Weiterbildung der Erfindung ist vorgesehen, dass Laufzeitunterschiede aus dem digitalen Signalweg und analogen Signalweg ausgeglichen werden, bevor die gewichtete Addition beider Signale erfolgt.

Besonders bevorzugt erfolgt das Ausgleichen der Laufzeitunterschiede in einem ersten Schritt und einem nachfolgenden zweiten Schritt, wobei im ersten Schritt eine grobe zeitliche Annäherung beider Signale und im zweiten Schritt mindestens annähernd eine exakte zeitliche Synchronisation beider Signal erfolgt. Dabei kann im ersten Schritt eine Audiokorrelation durchgeführt werden, indem die Audiosignale beider Signalwege jeweils tiefpassgefiltert und miteinander verglichen und zur Deckung gebracht werden, wobei durch entsprechende zeitliche Verschiebung der zugehörenden Videosignale eine grobe Laufzeitanpassung beider Videosignale durchgeführt wird. Die grobe Laufzeitanpassung erfolgt bevorzugt auf etwa 100 µsec genau.

In dem zweiten Schritt wird gemäß einer Weiterbildung der Erfindung eine Feinkorrelation beider Signale durchgeführt, indem die Bild- und/oder Zeilensynchronisationsignale beider Signalwege miteinander verglichen und durch zeitliche Verschiebung eines oder beider Signale zur Deckung gebracht werden. Die Feinkorrelation erfolgt auf mindestens etwa 100 bis 200 nsec genau.

Die erfindungsgemäße Anordnung weist bevorzugt mindestens zwei Empfänger zum Empfang von analogen Signalen und/oder mindestens zwei Empfänger zum Empfang von digitalen Signalen auf. Das Ausgangssignal eines jeden Empfängers wird in einem analogen Pfad jeweils mittels eines analogen Demodulators und in einem digitalen Pfad jeweils mittels eines digitalen Demodulators demoduliert, wobei aus den demodulierten analogen Signalen in einer analogen Auswähleinheit dasjenige mit der besten Empfangsqualität und aus den demodulierten digitalen Signalen in einer digitalen Auswähleinheit dasjenige mit der besten Empfangsqualität ausgewählt wird. Das analoge Signal mit der besten Empfangsqualität wird digitalisiert. Anschließend wird das digitalisierte analoge Signal mit der besten Empfangsqualität und das digitale Signal mit der besten Empfangsqualität einer Diversitätseinheit zugeführt, in welcher zeitabschnittsweise und/oder frequenzbereichsweise die beiden Signale gewichtet addiert werden. Hierbei können das Bildsignal beispielsweise als digitales YUV-Signal und die Tonsignale als PCM-Signale vorliegen.

Bevorzugt sind eingangsseitig m Antennen mittels eines Antennenauswahlnetzwerkes in beliebiger Kombination an n Empfänger anschließbar. Dabei kann das Ausgangssignal eines jeden Empfängers mittels je eines automatischen Verstärkungsreglers auf einen konstanten Pegel geregelt werden.

Bevorzugt liefert jeder digitale Demodulator einen paketorientierten MPEG Multi-Programm-Transport-Strom (MPTS) an eine MPTS-Diversitätseinheit (MD), welche einen MPEG-Multi-Programm-Transport-Strom mit weniger fehlerbehafteten Paketen auswählt und an einen MPEG-Decoder (DK) weiterleitet.

Des weiteren kann jedes der n Ausgangssignale der MPTS-Diversitätseinheit in je einem von n Demultiplexern demultiplext und mittels des in jedem Transportstrompaket enthaltenen Programmidentifizierers in Einzelprogrammströme (SPTS) aufgeteilt werden. Dabei wird aus den Multiprogrammtransportströmen mittels Filter ein Programm herausgefiltert. Die Ausgangssignale der n Demultiplexer werden an eine SPTS-, PES- oder ES-Diversitätseinheit (SD) geliefert, die aus Einzelprogrammtransportströmen (SPTS), paketorientierten Elementarströmen (PES), oder reinen Elementarströmen (ES), den Datenstrom mit der besten Qualität auswählt und an den MPEG-Decoder (DK) weiterleitet sowie Laufzeitunterschiede der einzelnen Datenströme ausgleicht.

Das Ausgangssignal des MPEG-Decoders und das Ausgangssignal der analogen Auswähleinheit werden dann in der Diversitätseinheit derart zu einem Wiedergabesignal zusammengefaßt, dass Abschnitte des einen Ausgangssignals mit korrespondierenden Abschnitten des anderen Ausgangssignals entsprechend ihrer Qualität gewichtet addiert werden, wobei unterschiedliche Laufzeiten der beiden Ausgangssignale ausgeglichen werden, und dass das addiert gewichtete sowie laufzeitausgeglichene Kombinationssignal einer Anzeige- und Ausgabeeinheit (AE) zugeführt wird. In der Diversitätseinheit wird der Videoanteil und der Audioanteil des vom MPEG-Decoder (DK) und des von der analogen Auswähleinheit (A) gelieferten Ausgangssignals getrennt ausgewertet, so dass der Videoanteil des einen Ausgangssignals mit dem Audioanteil des anderen Ausgangssignals kombinierbar ist.

Bevorzugt wird das mit dem ausgegebenen Videobild ausgegebene Audiosignal stets aus dem analogen Signalweg bereitgestellt, es sei denn, das aus dem digitalen Signalweg bereitgestellte Tonsignal ist qualitativ in dem jeweiligen Zeitabschnitt besser. Dies erfolgt deshalb, weil sich herausgestellt hat, dass aus dem anlogen Empfangssignal immer noch ein verhältnismäßig gutes Tonsignal ableiten läßt, wenn im digitalen Signalpfad schon kein Ton mehr detektierbar ist.

Ein Ausführungsbeispiel der Erfindung sieht vor, dass der Pegel des ZF-Signals der Empfänger mittels der Verstärkungsregler auf einen konstanten Wert geregelt wird.

Ein weiteres Ausführungsbeispiel der Erfindung sieht vor, dass jeder digitale Demodulator einen paketorientierten MPEG-Multi-Programm-Transport-Strom, abgekürzt MPTS, an eine MPTS Diversitätseinheit liefert, die einen MPEG-Multi-Programm-Transport-Strom mit fehlerfreien Paketen auswählt und an einen MPEG-Decoder weiterleitet.

Falls kein MPEG-Multi-Programm-Transport-Strom mit fehlerfreien Paketen gefunden wird, sieht ein weiteres Ausführungsbeispiel der Erfindung vor, dass jedes der n Ausgangssignale der MPTS-Diversitätseinheit in je einem von n Demultiplexern gedemultiplext und mittels des in jedem Transportstrompaket enthaltenen Programmidentifizierers in Einzelprogrammtransportströme, abgekürzt SPTS, aufgeteilt wird und dass aus den Einzelprogrammtransportströmen mittels Filter ein Programm herausgefiltert wird. Die Ausgangssignale der n Demultiplexer werden einer SPTS-, einer PES- oder einer ES-Diversitätseinheit zugeführt, die aus Einzelprogrammtransportströmen, paketorientierte Elementarströmen und reinen Elementarströmen den Datenstrom mit der besten Qualität auswählt und an einen MPEG-Decoder weiterleitet sowie Laufzeitunterschiede der einzelnen Datenströme ausgleicht.

Ein weiteres Ausführungsbeispiel der Erfindung sieht vor, dass in der Diversitätseinheit der Videoanteil und der Audioanteil der von der digitalen Auswähleinheit und von der analogen Auswähleinheit gelieferten Ausgangssignale getrennt ausgewertet werden. Schließlich sieht ein weiteres Ausführungsbeispiel der Erfindung vor, dass alle Einheiten, nämlich das Antennenauswahlnetzwerk, die Empfänger, die automatischen Verstärkungsregler, die analogen und die digitalen Demodulatoren, die analoge Auswähleinheit, die MPTS-Diversitätseinheit, die MPTS-Demultiplexer, die SPTS-, PES- und ES-Diversitäts-Einheit, der MPEG-Decoder, die Diversitätseinheit sowie die Anzeige- und Ausgabeeinheit von einer zentralen Steuereinheit gesteuert werden.

Die Erfindung wird anhand von Figuren im Zusammenhang mit einem Ausführungsbeispiel näher beschrieben und erläutert. Es zeigen:
- Fig.: 1 ein Ausführungsbeispiel einer erfindungsgemäßen Schaltungsanordnung im Blockschaltbild,
- Fig. 2: Transportstrompakete in der MPTS-Diversitätseinheit des Ausführungsbeispieles,
- Fig. 3: Datenpakete in der SPTS-Diversitätseinheit des Ausführungsbeispieles,
- Fig. 4: Datenpakete in der Diversitätseinheit des Ausführungsbeispieles,
- Fig. 5: ein Beispiel einer gewichteten Addition von zwei Bildsignalen anhand eines 8x8 Pixel- bzw. Bildpunktefeldes für die Luminanz- und Chrominanzsignalkombination (Luminanz-Chrominanz-Diversity).
- Fig. 6: ein Beispiel einer gewichteten Addition von zwei Bildsignalen im Frequenzbereich.

In den Figuren bezeichnen gleiche Bezugszeichen gleiche Teile mit gleicher Bedeutung, sofern nichts anderes angegeben ist.

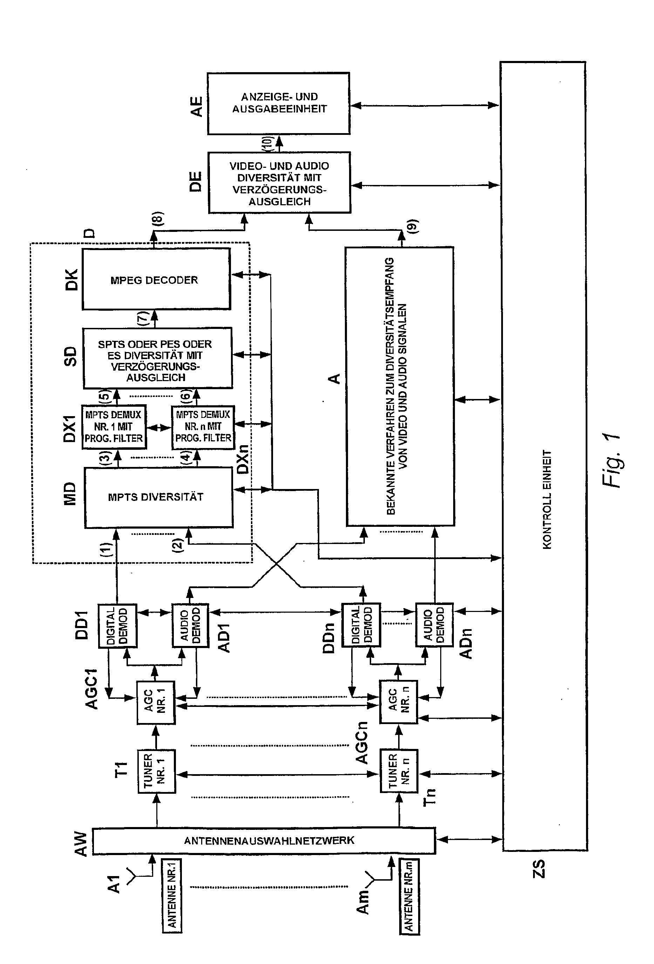

In Fig. 1 ist ein Ausführungsbeispiel einer erfindungsgemäßen Schaltungsanordnung gezeigt. Eine oder mehrere Antennen A1 bis Am sind an die m Eingänge eines Antennenauswahlnetzwerkes AW angeschlossen, an dessen n Ausgänge n Empfänger T1 bis Tn angeschlossen sind. m und n können gleich oder unterschiedlich sein. Der Ausgang eines jeden der n Empfänger T1 bis Tn ist mit dem Eingang je eines automatischen Verstärkungsreglers AGC1 bis AGCn verbunden. Der Ausgang eines jeden der n automatischen Verstärkungsregler AGC1 bis AGCn ist mit dem Eingang je eines digitalen Demodulators DD1 bis DDn sowie eines analogen Demodulators AD1 bis ADn verbunden. Jedem automatischen Verstärkungsregler sind daher ein digitaler und ein analoger Demodulator zugeordnet. Die Ausgänge der n digitalen Demodulatoren DD1 bis DDn sind mit den n Eingängen einer Multiprogrammtransportstrom-Diversitätseinheit MD verbunden, an deren n Ausgänge n Demultiplexer DX1 bis DXn mit Programmfilter angeschlossen sind. Die Ausgänge der Demultiplexer DX1 bis DXn sind mit den n Eingängen einer Diversitätseinheit SD für Einzelprogrammtransportströme, paketorientierte Elementarströme oder reine Elementarströme verbunden. Der Ausgang der Diversitätseinheit SD ist mit dem Eingang eines MPEG-Decoders DK verbunden, dessen Ausgang mit dem ersten Eingang einer Diversitätseinheit DE verbunden ist. Die Ausgänge der n analogen Demodulatoren AD1 bis ADn sind mit den n Eingängen einer analogen Auswähleinheit A verbunden, deren Ausgang mit dem zweiten Eingang der Diversitätseinheit DE verbunden ist. Der Ausgang der Diversitätseinheit DE ist mit dem Eingang einer Anzeige- und Ausgabeeinheit AE verbunden. Die Steuereingänge aller Einheiten - des Antennenauswahlnetzwerkes AW, der Empfänger T1 bis Tn, der Verstärkungsregler AGC1 bis AGCn, der digitalen Demodulatoren DD1 bis DDn, der analogen Demodulatoren AD1 bis ADn, der Diversitätseinheit MD, der Demultiplexer DX1 bis DX2, der Diversitätseinheit SD, des MPEG-Decoders DK, der analogen Auswähleinheit A, der Diversitätseinheit DE sowie der Anzeige- und Ausgabeeinheit AE - sind mit den Steueraus- und eingängen einer zentralen Steuereinheit ZS verbunden. Die Diversitätseinheit MD, die Demultiplexer DX1 bis DXn, die Diversitätseinheit SD und der MPEG-Decoder DK bilden die digitale Auswähleinheit D.

Mittels des Antennenauswahlnetzwerkes AW, das von der zentralen Steuereinheit ZS gesteuert wird, lassen sich m Antennen A1 bis Am beliebig mit den n Empfängern T1 bis Tn mit einer Ausnahme verschalten.

Die Ausgangssignale der n Empfänger T1 bis Tn werden mittels der n Verstärkungsregler AGC1 bis AGC2 auf einen konstanten gemeinsamen Pegel geregelt, was die folgende Demodulation und weitere Verarbeitung dieser Signale beträchtlich erleichtert. Vorzugsweise wird der Pegel der ZF-Signale der n Empfänger T1 bis Tn auf einen konstanten Wert geregelt.

Das vorzugsweise auf einen konstanten Pegel geregelte ZF-Signal eines jeden Verstärkungsreglers AGC1 bis AGCn wird in einem jeweiligen digitalen Demodulator DD1 bis DDn digital und in einem jeweiligen analogen Demodulator AD1 bis ADn analog demoduliert. Die von den analogen Demodulatoren AD1 bis ADn erzeugten demodulierten Ausgangssignale werden der analogen Auswähleinheit A zugeführt, die nach bekannten Verfahren und Kriterien, wie z. B. die Feldstärke oder die Intensität von Interferenzstörungen, von den n analogen Ausgangssignalen das beste auswählt und zur Diversitätseinheit DE weiterleitet. Das von der analogen Auswähleinheit A ermittelte beste Ausgangssignal wird entweder in der analogen Auswähleinheit A oder in der Diversitätseinheit DE digitalisiert.

Die digitalen Ausgangssignale der digitalen Demodulatoren DD1 bis DDn werden der digitalen Auswahleinheit D zugeführt, die ebenfalls das beste digitale Ausgangssignal auswählt und der Diversitätseinheit DE zuführt. Dort werden die Signalen gewichtet addiert.

Im einfachsten Fall werden stärker gestörte Abschnitte des von der digitalen Auswähleinheit D gelieferten Signales durch korrespondierende weniger gestörte Signalabschnitte des von der analogen Auswähleinheit A gelieferten Signales zeitabschnittsweise ersetzt. Sind dagegen die von der analogen Auswähleinheit A gelieferten Signale schlechter, werden diese in den entsprechenden Zeitabschnitten durch weniger fehlerbehaftete Signale aus der digitalen Auswähleinheit D ersetzt.

Die Anzeige- und Ausgabeeinheit AE erhält daher von der Diversitätseinheit DE ein weitgehend fehlerfreies Signal.

Anstelle des zeitlichen Ersetzens der Signale kann auch eine gewichtete Addition beider Signale durchgeführt werden, bei denen die beiden Gewichtungsfaktoren ungleich 0 bzw. 1 sind (Anm.: Bei 0 und 1 werden Signale, wie oben erläutert, ersetzt). Es können z.B. beide Signale mit 0,5 multipliziert bzw. gewichtet werden. Auch andere Gewichtungsfaktoren sind denkbar. Ziel muss jedoch gemäß der Erfindung sein, dass das erhaltene Summensignal besser als jedes der Einzelsignale ist.

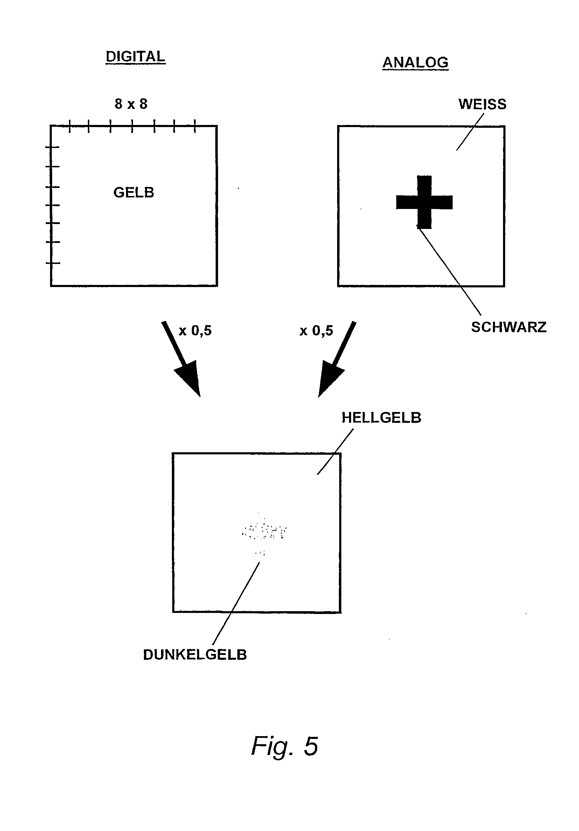

Eine gewichtete Addition im Luminanzsignal- und Chrominazsignalbereich wird im Zusammenhang mit Fig. 5 deutlich. Dort ist beispielhaft dargestellt, dass aus der digitalen Auswähleinheit D ein Bildsignal für 8x8 Bildpunkte (Pixel) erhalten wird, das im wesentlichen keine Bildstruktur erkennen läßt. Dafür erkennt man den richtigen Farbwert, z.B. gelb, für den 8x8 Bildpunkteblock. Aus der analogen Auswähleinheit A wird dagegen für den gleichen Bildausschnitt ein Signal erhalten, dass zwar noch eine Bildstruktur, z.B. die Umrisse eines Kreuzes in schwarz-weiß erkennen läßt, jedoch ohne jegliche Farbinformation ist, da der analoge Fernsehempfang aufgrund der Modulationsart des Farbsignals häufig dazu führt, dass die Farbe ausfällt während das Schwarz-Weiß-Bild noch zu sehen ist. Werden beide Bildsignale erfindungsgemäß addiert, wird ein Signal für diesen Bildausschnitt von 8x8 Bildpunkten erhalten, das das Kreuz vor hellgelbem Hintergrund erscheinen läßt. Ergebnis ist ein verbesserter Bildeindruck. Die Gewichtung beider Signale kann z.B. bei 0,5 liegen.

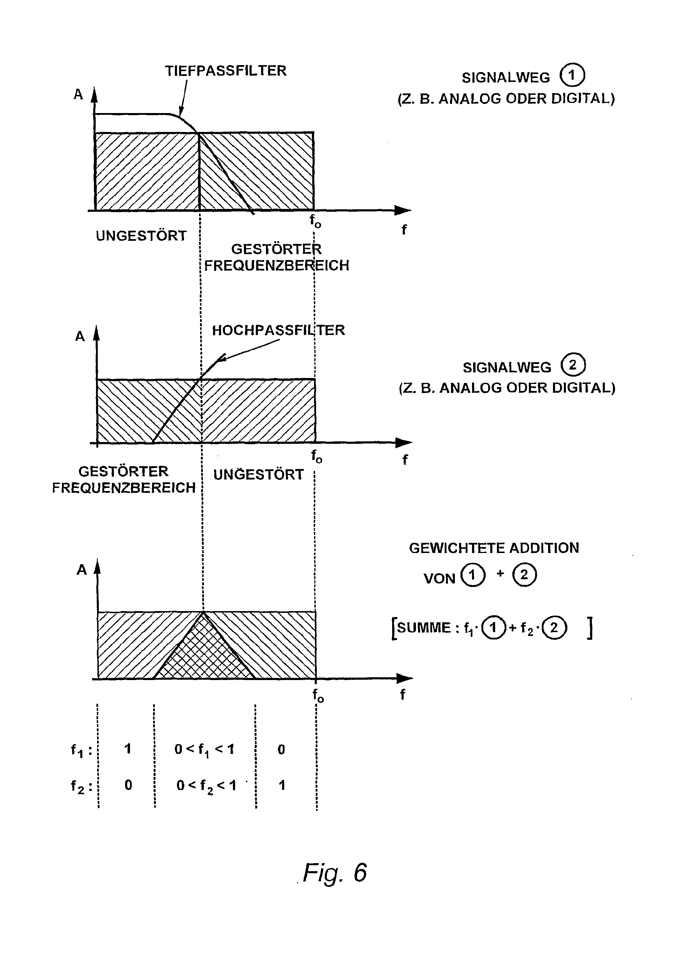

Eine weiteres Beispiel einer gewichteten Addition zeigt Fig. 6. Dort ist angenommen, dass der eine Signalweg, z.B. im analogen Kanal, im oberen Frequenzbereich gestört ist und der andere Signalweg, z.B. der digitale Kanal, im unteren Frequenzbereich stärkere Störungen aufweist. Es werden deshalb die gestörten Frequenzbänder mit geeigneten Filtern - hier Tiefpassfilter bzw. Hochpassfilter - herausgefiltert bzw. abgeblockt und mit den Signalanteilen des jeweils weniger gestörten Kanals gemischt. Man spricht bei dieser Addition der Signale von Addition im Frequenzbereich, weil die niederfrequenten Bildanteile aus dem digitalen Empfangssignal und die höherfrequenten Bildanteile aus dem analogen Empfangskanal miteinander addiert werden. Selbstvertändlich kann die Filterung bei Bedarf auch mit Bandpassfiltern erfolgen.

Die zentrale Steuereinheit ZS erhält für die Steuerung der einzelnen Einheiten ein Qualitätskriterium von der analogen Auswähleinheit A.

Die Funktion des digitalen Zweiges mit den digitalen Demodulatoren DD1 bis DDn und der digitalen Auswähleinheit D ist folgende.

An den Ausgängen der digitalen Demodulatoren DD1 bis DDn liegt beispielsweise ein paketorientierter MPEG-Multiprogramm-Transport-Strom vor. Aus den von den n digitalen Demodulatoren DD1 bis DDn gelieferten n MPEG-Multi-Progranun-TransportStrömen wählt die Diversitätseinheit MD für die Weiterverarbeitung fehlerfrei Pakete aus.

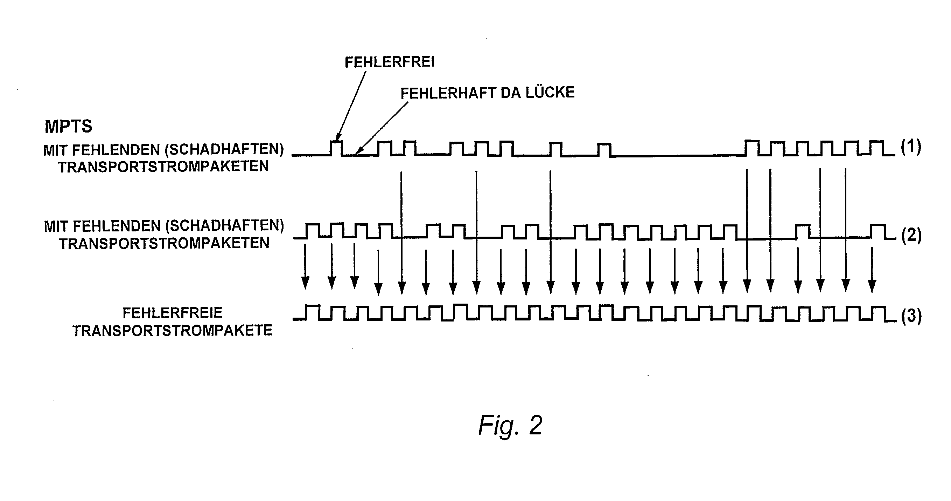

In Figur 2 sind drei Multiprogrammtransportströme (MPTS) dargestellt. Bei dem mit (1) bezeichneten Transportstrom fehlen einzelne Pakete, welche fehlerbehaftet sind. Bei (2) fehlen im Transportstrom einzelne Datenpakete, die fehlerbehaftet sind. Bei (3) wird aus den Transportströmen (1) und (2) ein neuer Multiprogrammtransportstrom MPTS generiert, der im günstigsten Fall nur fehlerfreie Transportstrompakete enthält.

Wenn keine fehlerfreien Pakete in der Diversitätseinheit MD zur Verfügung stehen, werden die einzelnen MPEG-Multi-Programm-Transport-Ströme den Demultiplexern DX1 bis DXn zugeführt und gedemultiplext. Mit Hilfe des in jedem Transportstrompaketes enthaltenen Programmidentifizierers werden die mit fehlerhaften Paketen behafteten MPEG-Multi-Programm-Transport-Ströme in einzelne Einzel-Programm-Transport-Ströme aufgeteilt. Mittels der in den Demultiplexern DX1 bis DXn vorgesehenen Filter wird beispielsweise ein Programm herausgefiltert. Dies ist auch möglich, wenn ein und dasselbe Programm aus unterschiedlichen Ausstrahlungen auf unterschiedlichen Frequenzen empfangen wird. Ebenso wird bei paketorientierten Elementarströmen und bei reinen nicht paketorientierten Elementarströmen verfahren. Die von den n Demultiplexern DX1 bis DXn erzeugten Ausgangssignale werden der Diversitätseinheit SD zugeführt, die Einzel-Programm-Transport-Ströme, paketorientierte Elementarströme oder reine Elementarströme verarbeiten kann.

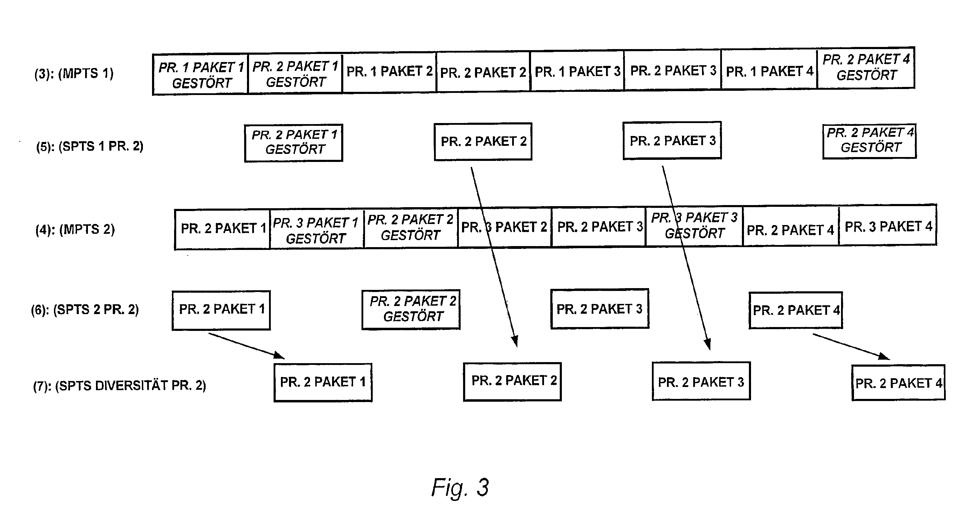

In Figur 3 ist anhand von Transportpaketen dargestellt, wie die Diversitätseinheit SD aus Transportströmen mit gestörten Paketen einen weniger fehlerbehafteten Transportstrom erzeugen kann.

In Figur 3 sind beispielhaft ein erster von einem digitalen Demultiplexer gelieferter Transportstrom MPTS1 und ein zweiter von einem Demultiplexer gelieferter Transportstrom MPTS2 gezeigt. Diese beiden Transportströme enthalten zu einem Programm PR1 und zu einem Programm PR2 gehörende Pakete.

Im Transportstrom MPTS1 sind das Paket 1 des Programms Pr1 und des Programms Pr2 sowie das Paket 4 des Programms Pr2 gestört, während die Pakete 2 und 3 des Programms Pr1 und des Programms Pr2 sowie das Paket 4 des Programms Pr1 ungestört sind. Mittels eines Filters wählt der Demultiplexer, z. B. der Demultiplexer DD1, aus dem Transportstrom MPTS1 die Pakete des Programms Pr2 aus. Es sind dies das gestörte Paket 1, die ungestörten Pakete 2 und 3 sowie das gestörte Paket 4.

Im zweiten Transportstrom MPTS2, der beispielsweise vom Demultiplexer DXn geliefert wird, sind Pakete des Programms Pr2 und eines Programms Pr3 enthalten. Die Pakete 1, 3 und 4 des Programms Pr2 sind ungestört, während die Pakete 1 und 3 des Programms Pr3 sowie das Paket 2 des Programms Pr2 gestört sind. Mittels eines Filters wählt die Diversitätseinheit SD die Pakete 1 bis 4 des Programms Pr2 aus. Die Pakete 1, 3 und 4 des Transportstromes MPTS2 sind ungestört, während das Paket 2 gestört ist. Die Diversitätseinheit SD setzt einen weniger gestörten und im Optimalfall ungestörten Transportstrom aus dem Paket 1 des Programms Pr2 des Transportstromes MPTS2, aus dem ungestörten Paket 2 des Programms Pr2 des Transportstromes MPTS1, aus dem ungestörten Paket 3 des Programms Pr2 des Transportstromes MPTS1 sowie aus dem ungestörten Paket 4 des Programms Pr2 des Transportstromes MPTS2 zusammen.

Dieser fehlerfreie oder weniger fehlerbehaftete Transportstrom wird vom MPEG-Decoder DK decodiert und der Diversitätseinheit DE zugeführt, die den von der analogen Auswähleinheit A ausgewählten besten Transportstrom erhält.

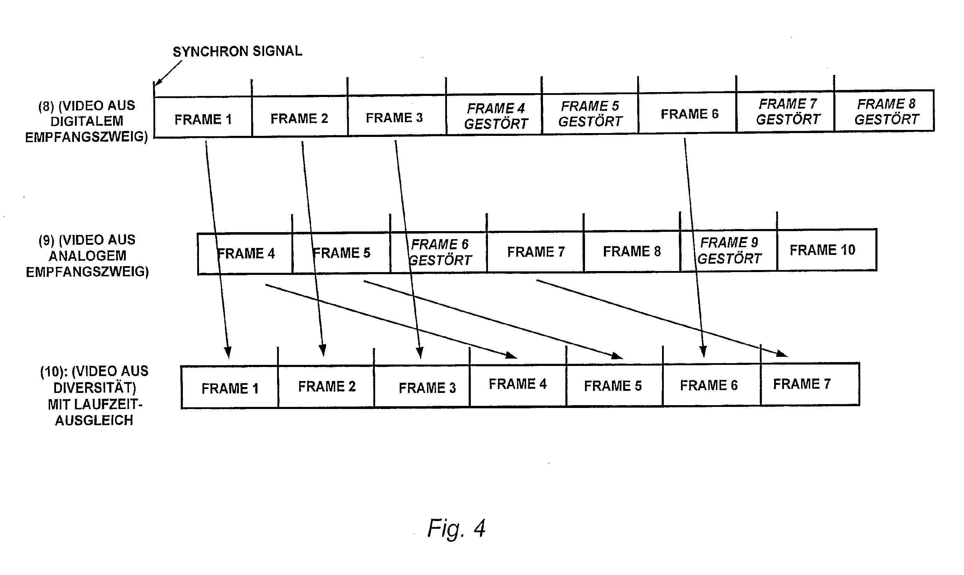

In Figur 4 ist beispielhaft gezeigt, wie die Diversitätseinheit DE aus dem von der digitalen Auswähleinheit D gelieferten und dem von der analogen Auswähleinheit A gelieferten Signal optimale Bild- und vorzugsweise auch Tonsignale erzeugt.

In Figur 4 sind ein von der digitalen Auswähleinheit D geliefertes Videosignal 8 mit Rahmen 1 bis 8 sowie ein von der analogen Auswähleinheit A geliefertes Videosignal 9 mit Rahmen 4 bis 10 gezeigt. Im Videosignal aus der digitalen Auswähleinheit D sind die Rahmen 1, 2, 3 und 6 ungestört, während die Rahmen 4, 5, 7 und 8 gestört sind. Im von der analogen Auswähleinheit A gelieferten Videosignal sind die Rahmen 4, 5, 7, 8 und 10 ungestört, während die Rahmen 6 und 9 gestört sind. Die Diversitätseinheit DE setzt nun aus den ungestörten Rahmen 1, 2, 3 und 6 des von der digitalen Auswähleinheit gelieferten Videosignals und aus den ungestörten Rahmen 4, 5 und 7 des von der analogen Auswähleinheit A gelieferten Videosignales ein Signal mit fehlerfreien oder weniger fehlerbehafteten Rahmen zusammen. Außerdem gleicht die Diversitätseinheit DE Laufzeitunterschiede zwischen den beiden Videosignalen aus.

Obwohl in Zusammenhang mit Fig. 4 lediglich von Bildsignalen die Rede war, gilt entsprechendes auch für die Verarbeitung von Ton- bzw. Audiosiganlen und einem Gemisch aus Bild-Tonsignalen.

Laufzeitunterschiede zwischen den von den Demultiplexern DX1 bis DXn gelieferten Programmströmen werden in der Diversitätseinheit SD kompensiert.

Die Erfindung ist besonders für den Empfang und die Verarbeitung von Videosignalen geeignet. Vorzugsweise werden der Videoanteil und der Audioanteil des Videosignals getrennt bewertet. Diese getrennte Bewertung ist möglich, weil in einem Videosignal Vertikalsynchronsignale und Horizontalsynchronsignale enthalten sind. In der Diversitätseinheit DE wird außerdem Synchronizität zwischen Bild und Ton hergestellt.

Die Erfindung ist besonders für die schwierigen und häufig wechselnden Empfangsverhältnisse bei mobilem Empfang, z. B in einem Kraftfahrzeug, geeignet, aber keineswegs auf diesen Einsatz beschränkt. Sie ist auch für eine ortsfeste Heimanlage geeignet.

### Bezugszeichenliste

A analoge Auswähleinheit
AD1 ADn analoger Demodulator
AE Anzeige- und Ausgabeeinheit
AGC1 - AGCn automatischer Verstärkungsregler
AW Antennenauswahlnetzwerk
A1 -Am Antenne
D digitale Auswähleinheit
DD1 DDn digitaler Demodulator
DE Diversitätseinheit
DK MPEG-Decoder
DX1 -DXn Demultiplexer
MD MPTS-Diversitätseinheit
SD SPTS-, PES- oder ES-Diversitätseinheit
T1 -Tn Empfänger
ZS zentrale Steuereinheit

## Patentansprüche

1. Verfahren zum Mehrwegeempfang von Fernsehsignalen mittels mehrerer Empfänger (T1 bis Tn) und mindestens einer Antenne (A1 bis An),
wobei analoge Fernsehsignale von mehr als einem Empfänger empfangen werden, und
das von einem jeden Empfänger in einem analogen Pfad ausgegebene analoge Fernsehsignal mittels eines analogen Demodulators (AD1 bis ADn) demoduliert wird,
**dadurch gekennzeichnet, dass**
aus den demodulierten analogen Signalen in einer analogen Auswähleinheit (A) dasjenige mit der besten Empfangsqualität ausgewählt wird,
das analoge Fernsehsignal mit der besten Empfangsqualität digitalisiert wird,
digitale Fernsehsignale von mehr als einem Empfänger empfangen werden,
das von einem jeden Empfänger in einem digitalen Pfad ausgegebene digitale Fernsehsignal mittels eines digitalen Demodulators (DD1 bis DDn) digital demoduliert wird,
aus den demodulierten digitalen Fernsehsignalen in einer digitalen Auswähleinheit (D) dasjenige mit der besten Empfangsqualität ausgewählt wird,
das digitalisierte analoge Fernsehsignal mit der besten Empfangsqualität und das digitale Fernsehsignal mit der besten Empfangsqualität einer Diversitätseinheit (DE) zugeführt wird, und
das digitalisierte analoge Fernsehsignal und das digitale Fernsehsignal mit der besten Empfangsqualität in der Diversitätseinheit (DE) so miteinander gewichtet addiert werden, dass eine Kombination beider Signale ausgegeben wird.

2. Verfahren nach Anspruch 1, **dadurch gekennzeichnet, dass** die gewichtete Addition der beiden Signale im Frequenz- und/oder Zeitbereich erfolgt.

3. Verfahren nach Anspruch 1 oder 2, **dadurch gekennzeichnet, dass** die gewichtete Addition der beiden Signale erfolgt, indem die niederfrequenten Signalanteile aus dem einen (digitalen oder anlaogen) Signalweg und die höherfrequenten Signalanteile aus dem anderen (analogen oder digitalen) Signalweg oder die Chrominanzanteile des einen Signalweges mit den Luminanzanteilen des anderen Signalweges miteinander kombiniert werden.

4. Verfahren nach einem der Ansprüche 1 bis 3, **dadurch gekennzeichnet, dass** aus dem digitalen Signalweg und aus dem analogen Signalweg jeweils Bild- und Audiosignale bereitgestellt und in der Diversitätseinheit (DE) gewichtet addiert werden.

5. Verfahren nach einem der Ansprüche 1 bis 4, **dadurch gekennzeichnet, dass** die gewichtete Addition quantisiert durchgeführt wird.

6. Verfahren nach einem der Ansprüche 1 bis 5, **dadurch gekennzeichnet, dass** Laufzeitunterschiede aus dem digitalen Signalweg und analogen Signalweg ausgeglichen werden, bevor die gewichtete Addition beider Signale erfolgt.

7. Verfahren nach Anspruch 6, **dadurch gekennzeichnet, dass** das Ausgleichen der Laufzeitunterschiede in einem ersten Schritt und einem nachfolgenden zweiten Schritt erfolgt, wobei im ersten Schritt eine grobe zeitliche Annäherung beider Signale und im zweiten Schritt mindestens annähernd eine exakte zeitliche Sychronisation beider Signale erfolgt.

8. Verfahren nach Anspruch 7, **dadurch gekennzeichnet, dass** im ersten Schritt eine Audiokorrelation durchgeführt wird, indem die Audiosignale beider Signalwege jeweils tiefpassgefiltert und miteinander verglichen und zur Deckung gebracht werden, wobei durch entsprechende zeitliche Verschiebung der zugehörenden Videosignale eine grobe Laufzeitanpassung beider Videosignale durchgeführt wird.

9. Verfahren nach Anspruch 7, **dadurch gekennzeichnet, dass** die grobe Laufzeitanpassung auf die Zeitdauer einiger Bildzeilen und vorzugsweise auf etwa 50 - 100 µsec genau erfolgt.

10. Verfahren nach einem der Ansprüche 7 bis 9, **dadurch gekennzeichnet, dass** in dem zweiten Schritt eine Feinkorrelation beider Signale erfolgt, indem die Bild- und/oder Zeilensynchronisationsignale beider Signalwege miteinander verglichen und durch zeitliche Verschiebung eines oder beider Signale zur Deckung gebracht werden.

11. Verfahren nach Anspruch 10, **dadurch gekennzeichnet, dass** die feine Laufzeitanpassung an eine darzustellende Bildpunktauflösung angepaßt ist und vorzugsweise auf mindestens etwa 50 bis 200 nsec genau erfolgt.

12. Verfahren nach einem der Ansprüche 1 bis 13, **dadurch gekennzeichnet, dass** n Antennen (A1 bis A1n) mittels eines Antennenauswahlnetzwerkes (AW) in beliebiger Kombination an n Empfänger (T1 bis Tn) anschließbar sind.

13. Verfahren nach einem der Ansprüche 1 bis 12, **dadurch gekennzeichnet, dass** das Ausgangssignal eines jeden Empfängers (T1 bis Tn) mittels je eines automatischen Verstärkungsreglers (AGC1 bis AGCn) auf einen konstanten Pegel geregelt wird.

14. Verfahren nach einem der Ansprüche 1 bis 13, **dadurch gekennzeichnet, dass** jeder digitale Demodulator (DD1 bis DDn) einen paketorientierten MPEG Multi-Programm-Transport-Strom (MPTS), an eine MPTS-Diversitätseinheit (MD) liefert, die einen MPEG-Multi-Programm-Transport-Strom mit weniger fehlerbehafteten Paketen auswählt und an einen MPEG-Decoder (DK) weiterleitet.

15. Verfahren nach Anspruch 14, **dadurch gekennzeichnet, dass** jedes der n Ausgangssignale der MPTS-Diversitätseinheit (MD) in je einem von n Demultiplexern (DX1 bis DXn) demultiplext und mittels des in jedem Transportstrompaket enthaltenen Programmidentifizierers in Einzelprogrammströme, abgekürzt SPTS, aufgeteilt wird und dass aus den Multiprogrammtransportströmen mittels Filter ein Programm herausgefiltert wird.

16. Verfahren nach Anspruch 15, **dadurch gekennzeichnet, dass** die Ausgangssignale der n Demultiplexer (DX1 bis DXn) an eine SPTS-, PES- oder ES-Diversitätseinheit (SD) geliefert werden, die aus Einzelprogrammtransportströmen (SPTS), paketorientierten Elementarströmen (PES), oder reinen Elementarströmen (ES), den Datenstrom mit der besten Qualität auswählt und an den MPEG-Decoder (DK) weiterleitet sowie Laufzeitunterschiede der einzelnen Datenströme ausgleicht.

17. Verfahren nach einem der Ansprüche 14 bis 16, **dadurch gekennzeichnet, dass** das Ausgangssignal des MPEG-Decoders (DK) und das Ausgangssignal der analogen Auswähleinheit (A) in der Diversitätseinheit (DE) derart zu einem Wiedergabesignal zusammengefaßt werden, dass Abschnitte des einen Ausgangssignals mit korrespondierenden Abschnitten des anderen Ausgangssignals entsprechend ihrer Qualität gewichtet addiert werden, wobei unterschiedliche Laufzeiten der beiden Ausgangssignale ausgeglichen werden und dass das addiert gewichtete sowie laufzeitausgeglichene Kombinationssignale einer Anzeige-und Ausgabeeinheit (AE) zugeführt wird.

18. Verfahren nach Anspruch 17, **dadurch gekennzeichnet, dass** in der Diversitätseinheit (DE) der Videoanteil und der Audioanteil des vom MPEG-Decoder (DK) und des von der analogen Auswähleinheit (A) gelieferten Ausgangssignals getrennt ausgewertet werden, so dass der Videoanteil des einen Ausgangssignals mit dem Audioanteil des anderen Ausgangssignals kombinierbar ist.

19. Verfahren nach Anspruch 18, **dadurch gekennzeichnet, dass** das mit dem ausgegebenen Videobild ausgegebene Audiosignal aus dem analogen Signalweg bereitgestellt wird, es sei denn, das aus dem digitalen Signalweg bereitgestellte Tonsignal ist qualitativ in dem jeweiligen Zeitabschnitt besser.

20. Verfahren nach einem der Ansprüche 17 bis 19, **dadurch gekennzeichnet, dass** das Antennenauswahlnetzwerk (AW), die Empfänger (T1 bis Tn), die automatischen Verstärkungsregler (AGC1 bis AGCn), die analogen Demodulatoren (AD1 bis ADn), die digitalen Demodulatoren (DD1 bis DDn), die analoge Auswähleinheit (A), die digitale Auswähleinheit (D), die Diversitätseinheit (DE) sowie die Anzeige- und Ausgabeeinheit (AE) von einer zentralen Steuereinheit (ZS) gesteuert werden.

21. Verfahren nach Anspruch 20, **dadurch gekennzeichnet, dass** die MPTS-Diversitätseinheit (MD), die MPTS-Demultiplexer (DX1 bis DXn), die SPTS-, PES- oder ES-Diversitätseinheit (SD) und der MPEG-Decoder (DK) der digitalen Auswähleinheit (D) von der zentralen Steuereinheit (ZS) gesteuert werden.

22. Verfahren nach Anspruch 20 oder 21, **dadurch gekennzeichnet, dass** die analoge Auswähleinheit (A) ein Qualitätskriterium der analogen Signale erzeugt und der zentralen Steuereinheit (ZS) übermittelt.

23. Schaltungsanordnung zum Mehrwegeempfang von Fernsehsignalen mittels mehrerer Empfänger und mindestens einer Antenne,
wobei mehr als ein Empfänger zum Empfang von analogen Fernsehsignalen vorgesehen sind mit jeweils nachgeschalteten Signalverarbeitungseinheiten, und
das von jedem Empfänger in einem analogen Pfad ausgegebene analoge Fernsehsignal mittels eines analogen Demodulators demodulierbar ist,
**dadurch gekennzeichnet, dass**
aus den demodulierten analogen Fernsehsignalen in einer analogen Auswähleinheit (A) dasjenige mit der besten Empfangsqualität auswählbar ist,
das analoge Fernsehsignal mit der besten Empfangsqualität in einer Digitalisierungseinheit digitalisierbar ist,
mehr als ein Empfänger zum Empfang von digitalen Fernsehsignalen vorgesehen sind,
das digitale Fernsehsignal, das von einem jedem Empfänger in einem digitalen Pfad ausgegebenen wird, mittels eines digitalen Demodulators (DD1 bis DDn) digital demodulierbar ist,
aus den demodulierten digitalen Fernsehsignalen in einer digitalen Auswähleinheit (D) dasjenige mit der besten Empfangsqualität auswählbar ist,
das digitalisierte analoge Fernsehsignal mit der besten Empfangsqualität und das digitale Fernsehsignal mit der besten Empfangsqualität einer Diversitätseinheit (DE) zuführbar sind, und
das digitalisierte analoge Fernsehsignal sowie das digitale Fernsehsignal mit der besten Empfangsqualität in der Diversitätseinheit (DE) so miteinander gewichtet addierbar sind, dass eine Kombination beider Signale an einer Ausgabeeinheit (AE) ausgebbar ist.

24. Schaltungsanordnung nach Anspruch 23, **dadurch gekennzeichnet, dass** die gewichtete Addition der beiden Signale im Frequenz- und/oder Zeitbereich oder durch gewichtete Addition von Chrominanz- und Luminanzanteilen durchführbar ist.

25. Schaltungsanordnung nach Anspruch 23 oder 24, **dadurch gekennzeichnet, dass** die gewichtete Addition der beiden Signale durchführbar ist, indem die niederfrequenten Signalanteile aus dem einen (digitalen oder analogen) Signalweg und die höherfrequenten Signalanteile aus dem anderen (analogen oder digitalen) Signalweg miteinander kombiniert werden.

26. Schaltungsanordnung nach einem der Ansprüche 23 bis 25, **dadurch gekennzeichnet, dass** an einem Ausgang des digitalen Signalweges und an einem Ausgang des analogen Signalweges jeweils Bild- und Tonsignale abgreifbar und in der Diversitätseinheit (DE) gewichtet addierbar sind.

27. Schaltungsanordnung nach einem der Ansprüche 23 bis 26, **dadurch gekennzeichnet, dass** die gewichtete Addition quantisiert durchführbar ist.

28. Schaltungsanordnung nach einem der Ansprüche 23 bis 27, **dadurch gekennzeichnet, dass** Laufzeitunterschiede aus dem digitalen Signalweg und analogen Signalweg ausgleichbar sind, bevor die gewichtete Addition beider Signale erfolgt.

29. Schaltungsanordnung nach Anspruch 28, **dadurch gekennzeichnet, dass** das Ausgleichen der Laufzeitunterschiede in einem ersten Schritt und einein nachfolgenden zweiten Schritt durchführbar ist, wobei im ersten Schritt eine grobe zeitliche Annäherung beider Signale und im zweiten Schritt mindestens annähernd eine exakte zeitliche Sychronisation beider Signal erfolgt.

30. Schaltungsanordnung nach Anspruch 29, **dadurch gekennzeichnet, dass** im ersten Schritt eine Audiokorrelation durchführbar ist, indem die Audiosignale beider Signalwege jeweils tiefpassgefiltert und miteinander verglichen und zur Deckung gebracht werden, wobei durch entsprechende zeitliche Verschiebung der zugehörenden Videosignale eine grobe Laufzeitanpassung beider Videosignale durchgeführt wird.

31. Schaltungsanordnung nach Anspruch 29 oder 30, **dadurch gekennzeichnet, dass** die grobe Laufzeitanpassung auf die Zeitdauer von einigen Bildzeilen und vorzugsweise auf etwa 50 bis 100 µsec genau durchführbar ist.

32. Schaltungsanordnung nach einem der Ansprüche 29 bis 31, **dadurch gekennzeichnet, dass** in dem zweiten Schritt eine Feinkorrelation beider Signale durchführbar ist, indem die Bild- und/oder Zeilensynchronisationsignale der Videosignale beider Signalwege miteinander verglichen und durch zeitliche Verschiebung eines oder beider Signale zur Deckung gebracht werden.

33. Schaltungsanordnung nach Anspruch 32, **dadurch gekennzeichnet, dass** die feine Laufzeitanpassung entsprechend der darzustellenden Bildpunktauflösung gewählt ist und vorzugsweise auf mindestens etwa 100 bis 200 nsec genau durchführbar ist.

34. Schaltungsanordnung nach einem der Ansprüche 23 bis 33 **dadurch gekennzeichnet, dass** n Antennen (A1 bis An) mittels eines Antennenauswahlnetzwerkes (AW) in beliebiger Kombination an n Empfänger (T1 bis Tn) anschließbar sind.

35. Schaltungsanordnung nach einem der Ansprüche 23 bis 34, **dadurch gekennzeichnet, dass** das Ausgangssignal eines jeden Empfängers (T1 bis Tn) mittels je eines automatischen Verstärkungsreglers (AGC1 bis AGCn) auf einen konstanten Pegel regelbar ist.

36. Schaltungsanordnung nach einem der Ansprüche 23 bis 35, **dadurch gekennzeichnet, dass** jeder digitale Demodulator (DD1 bis DDn) einen paketorientierten MPEG Multi-Programm-Transport-Strom (MPTS) an eine MPTS-Diversitätseinheit (MD) liefert, die einen MPEG-Multi-Programm-Transport-Strom mit weniger fehlerbehafteten Paketen auswählt und an einen MPEG-Decoder (DK) weiterleitet.

37. Schaltungsanordnung nach Anspruch 36, **dadurch gekennzeichnet, dass** jedes der n Ausgangssignale der MPTS-Diversitätseinheit (MD) in je einem von n Demultiplexern (DX1 bis DXn) demultiplext und mittels des in jedem Transportstrompaket enthaltenen Programmidentifizierers in Einzelprogrammströme SPTS aufgeteilt wird und dass aus den Multiprogrammtransportströmen mittels Filter ein Programm herausgefiltert wird.

38. Schaltungsanordnung nach Anspruch 37, **dadurch gekennzeichnet, dass** die Ausgangssignale der n Demultiplexer (DX1 bis DXn) an eine SPTS-, PES- oder ES-Diversitätseinheit (SD) geliefert werden, die aus Einzelprogrammtransportströmen (SPTS) paketorientierten Elementarströmen (PES) oder reinen Elementarströmen (ES), den Datenstrom mit der besten Qualität auswählt und an den MPEG-Decoder (DK) weiterleitet sowie Laufzeitunterschiede der einzelnen Datenströme ausgleicht.

39. Schaltungsanordnung nach einem der Ansprüche 36 bis 38, **dadurch gekennzeichnet, dass** das Ausgangssignal des MPEG-Decoders (DK) und das Ausgangssignal der analogen Auswähleinheit (A) in der Diversitätseinheit (DE) derart zu einem Wiedergabesignal zusammenfassbar sind, dass Abschnitte des einen Ausgangssignals mit korrespondierenden Abschnitten des anderen Ausgangssignals entsprechend ihrer Qualität gewichtet addiert werden, wobei unterschiedliche Laufzeiten der beiden Ausgangssignale ausgeglichen werden und dass das addiert gewichtete sowie laufzeitausgeglichene Kombinationssignal einer Anzeige- und Ausgabeeinheit (AE) zugeführt wird.

40. Schaltungsanordnung nach Anspruch 39, **dadurch gekennzeichnet, dass** in der Diversitätseinheit (DE) der Videoanteil und der Audioanteil des vom MPEG-Decoder (DK) und des von der analogen Auswähleinheit (A) gelieferten Ausgangssignals getrennt auswertbar sind, so dass der Videoanteil des einen Ausgangssignals mit dem Audioanteil des anderen Ausgangssignals und umgekehrt kombinierbar ist.

41. Schaltungsanordnung nach Anspruch 40, **dadurch gekennzeichnet, dass** das mit dem ausgegebenen Videobild ausgegebene Audiosignal aus dem analogen Signalweg bereitstellbar ist, es sei denn, das aus dem digitalen Signalweg bereitgestellte Tonsignal ist qualitativ in dem jeweiligen Zeitabschnitt besser.

42. Schaltungsanordnung nach einem der Ansprüche 39 bis 41, **dadurch gekennzeichnet, dass** das Antennenauswahlnetzwerk (AW), die Empfänger (T1 bis Tn), die automatischen Verstärkungsregler (AGC1 bis AGCn), die analogen Demodulatoren (AD1 bis ADn), die digitalen Demodulatoren (DD1 bis DDn), die analoge Auswähleinheit (A), die digitale Auswähleinheit (D), die Diversitätseinheit (DE) sowie die Anzeige- und Ausgabeeinheit (AE) von einer zentralen Steuereinheit (ZS) steuerbar sind.

43. Schaltungsanordnung nach Anspruch 42, **dadurch gekennzeichnet, dass** die MPTS-Diversitätseinheit (MD), die MPTS-Demultiplexer (DX1 bis DXn), die SPTS-, PES- oder ES-Diversitätseinheit (SD) und der MPEG-Decoder (DK) der digitalen Auswähleinheit (D) von der zentralen Steuereinheit (ZS) steuerbar sind.

44. Schaltungsanordnung nach Anspruch 41 oder 43, **dadurch gekennzeichnet, dass** die analoge Auswähleinheit (A) ein Qualitätskriterium der analogen Signale erzeugt und der zentralen Steuereinheit (ZS) übermittelt.

45. Schaltungsanordnung nach Anspruch 43 oder 44, **dadurch gekennzeichnet, dass** Steuerausgänge der zentralen Steuereinheit (ZS) mit Steuereingängen des Antennenauswahlnetzwerkes (AW), der n Empfänger (T1 bis Tn), der n automatischen Verstärkungsregler (AGC1 bis AGCn), der n analogen Demodulatoren (AD1 bis ADn), der n digitalen Demodulatoren (DD1 bis DDn), der analogen Auswähleinheit (A), der digitalen Auswähleinheit (D), der Diversitätseinheit (DE) sowie der Anzeige- und Ausgabeeinheit (AE) verbunden sind.

46. Schaltungsanordnung nach Anspruch 23, **dadurch gekennzeichnet dass** die Ausgänge der n digitalen Demodulatoren (DD1 bis DDn) mit n Eingängen einer MPTS-Diversitätseinheit (MD) verbunden sind, deren n Ausgänge an Eingänge von n MPTS-Demultiplexer (DX1 bis DXn) angeschlossen sind, dass Ausgänge der n Demultiplexer (DX1 bis DXn) mit n Eingängen einer SPTS-, PES- oder ES-Diversitätseinheit (SD) verbunden sind, deren Ausgang mit einem Eingang eines MPEG-Decoders (DK) verbunden ist, dessen Ausgang mit einem Eingang der Diversitätseinheit (DE) verbunden ist.

47. Schaltungsanordnung nach Anspruch 46, **dadurch gekennzeichnet, dass** die Steuereingänge der MPTS-Diversitätseinheit (MD), der n Demultiplexer (DX1 bis DXn), der PTS-, PES- oder ES-Diversitätseinheit (SD) und des MPEG-Decoders (DK) mit den Steuerausgängen der zentralen Steuereinheit (ZS) verbunden sind.

## Claims

1. Method for the multipath reception of television signals by means of several receivers (T1 to Tn) and at least one antenna (A1 to An),
wherein analog television signals are received by multiple receivers, and
the analog television signal output by each receiver in an analog path is demodulated by means of an analog demodulator (AD1 to ADn),
**characterized in that**,
from the demodulated analog signals, the one with the best reception quality is selected in an analog selector unit (A),
the analog television signal with the best reception quality is digitized,
digital television signals are received by multiple receivers,
the digital television signal output by each receiver in a digital path is digitally demodulated by means of a digital demodulator (DD1 to DDn),
from the demodulated digital television signals, the one with the best reception quality is selected in a digital selector unit (D),
the digitized analog television signal with the best reception quality and the digital television signal with the best reception quality is supplied to a diversity unit (DE), and
the digitized analog television signal and the digital television signal with the best reception quality are added in a weighted manner to one another in the diversity unit (DE), so that a combination of the two signals is output.

2. Method according to Claim 1, **characterized in that** the weighted addition of the two signals is performed in the frequency and/or time domain.

3. Method according to Claim 1 or 2, **characterized in that** the weighted addition of the two signals is performed by combining with one another the low-frequency signal portions from one (digital or analog) signal path and the high-frequency signal portions from the other (analog or digital) signal path, or the chrominance portions of one signal path with the luminance portions of the other signal path.

4. Method according to one of Claims 1 to 3, **characterized in that**, from the digital signal path and from the analog signal path, in each case image and audio signals are provided and added in a weighted manner in the diversity unit (DE).

5. Method according to one of Claims 1 to 4, **characterized in that** the weighted addition is performed in a quantized manner.

6. Method according to one of Claims 1 to 5, **characterized in that** the running time differences from the digital signal path and the analog signal path are compensated for before the weighted addition of the two signals is performed.

7. Method according to Claim 6, **characterized in that** the compensation for the running time differences occurs in a first step and in a subsequent second step, wherein, in the first step, a rough temporal approximation of the two signals occurs, and, in the second step, at least approximately, a precise temporal synchronization of the two signals occurs.

8. Method according to Claim 7, **characterized in that**, in the first step, an audio correlation is carried out, in each case by low-pass filtering the audio signals of the two signal paths and comparing them to one another and making them coincide, wherein, due to a corresponding displacement in time of the associated video signals, a rough running time adaptation of the two video signals is carried out.

9. Method according to Claim 7, **characterized in that** the rough running time adaptation over the duration of several image lines and preferably at approximately 50-100 µsec is carried out precisely.

10. Method according to one of Claims 7 to 9, **characterized in that**, in the second step, a fine correlation of the two signals occurs, wherein the image and/or line synchronization signals of the two signal paths are compared to one another and made to coincide due to a displacement in time of one or both signals.

11. Method according to Claim 10, **characterized in that** the fine running time adaptation is adapted to a pixel resolution to be represented and preferably at at least approximately 50 to 200 nsec precisely.

12. Method according to one of Claims 1 to 11, **characterized in that** n antennas (A1 to Aln) can be connected by means of an antenna selector network (AW) in any desired combination to n receivers (T1 to Tn).

13. Method according to one of Claims 1 to 12, **characterized in that** the output signal of each receiver (T1 to Tn) is adjusted to a constant level in each case by means of an automatic gain control (AGC1 to AGCn).

14. Method according to one of Claims 1 to 13, **characterized in that** each digital demodulator (DD1 to DDn) supplies a package-oriented MPEG multi-program transport stream (MPTS) to an MPTS diversity unit (MD), which selects an MPEG multi-program transport stream with fewer faulty packages and conveys it to an MPEG decoder (DK).

15. Method according to Claim 14, **characterized in that** each one of the n output signals of the MPTS diversity unit (MD) is demultiplexed in each case in one of n demultiplexers (DX1 to DXn) and divided by means of the program identifier contained in each transport stream package into single program streams, abbreviated (SPTS), and **in that** by means of a filter a program is filtered out of the multi-program transport streams.

16. Method according to Claim 15, **characterized in that** the output signals of the n demultiplexers (DX1 to DXn) are supplied to an SPTS, PES or ES diversity unit (SD), which selects the data stream with the best quality from single program transport streams (SPTS), package-oriented elementary streams (PES) or pure elementary streams (ES), and conveys it to the MPEG decoder (DK) and which also compensates for running time differences of the single data streams.

17. Method according to one of Claims 14 to 16, **characterized in that** the output signal of the MPEG decoder (DK) and the output signal of the analog selector unit (A) are combined in the diversity unit (DE) to form a playback signal in such a manner that sections of one output signal are added in a weighted manner in accordance with their quality to corresponding sections of the other output signal, wherein different running times of the two output signals are compensated for, and that the added, weighted as well as running time-compensated combination signals is supplied to a display and output unit (AE).

18. Method according to Claim 17, **characterized in that**, in the diversity unit (DE), the video portion and the audio portion of the output signal supplied by the MPEG decoder (DK) and of the output signal supplied by the analog selector unit (A) are evaluated separately, so that the video portion of one output signal can be combined with the audio portion of the other output signal.

19. Method according to Claim 18, **characterized in that** the audio signal output with the video image output is provided from the analog signal path, unless the sound signal provided from the digital signal path is qualitatively better in the respective time segment.

20. Method according to one of Claims 17 to 19, **characterized in that** the antenna selector network (AW), the receivers (T1 to Tn), the automatic gain controls (AGC1 to AGCn), the analog demodulators (AD1 to ADn), the digital demodulators (DD1 to DDn), the analog selector unit (A), the digital selector unit (D), the diversity unit (DE) as well as the display and output unit (AE) are controlled by a central control unit (ZS).

21. Method according to Claim 20, **characterized in that** the MPTS diversity unit (MD), the MPTS demultiplexers (DX1 to DXn), the SPTS, PES or ES diversity unit (SD) and the MPEG decoder (DK) of the digital selector unit (D) are controlled by the central control unit (ZS).

22. Method according to Claim 20 or 21, **characterized in that** the analog selector unit (A) generates a quality criterion for the analog signals and transfers it to the central control unit (ZS).

23. Circuit arrangement for the multipath reception of television signals by means of several receivers and at least one antenna,
wherein multiple receivers are provided for receiving analog television signals with in each case downstream signal processing units, and
the analog television signal output by each receiver in an analog path can be demodulated by means of an analog demodulator,
**characterized in that**,
from the demodulated analog television signals, the one with the best reception quality can be selected in an analog selector unit (A),
the analog television signal with the best reception quality can be digitized in a digitizing unit,
multiple receivers are provided for receiving digital television signals,
the digital television signal output by each receiver in a digital path can be digitally demodulated by means of a digital demodulator (DD1 to DDn),
from the demodulated digital television signals, the one with the best reception quality can be selected in a digital selector unit (D),
the digitized analog television signal with the best reception quality and the digital television signal with the best reception quality can be supplied to a diversity unit (DE), and
the digitized analog television signal as well as the digital television signal with the best reception quality can be added by a weighted addition to one another in the diversity unit (DE), so that a combination of the two signals can be output at an output device (AE).

24. Circuit arrangement according to Claim 23, **characterized in that** the weighted addition of the two signals can be carried out in the frequency and/or time domain or by weighted addition of chrominance and luminance portions.

25. Circuit arrangement according to Claim 23 or 24, **characterized in that** the weighted addition of the two signals can be carried out by combining with one another the low-frequency signal portions from one (digital or analog) signal path and the high-frequency signal portions from the other (analog or digital) signal path.

26. Circuit arrangement according to one of Claims 23 to 25, **characterized in that**, at an output of the digital signal path and at an output of the analog signal path, in each case image and sound signals can be tapped and added in a weighted manner in the diversity unit (DE).

27. Circuit arrangement according to one of Claims 23 to 26, **characterized in that** the weighted addition can be carried out in a quantized manner.

28. Circuit arrangement according to one of Claims 23 to 27, **characterized in that** the running time differences from the digital signal path and the analog signal path can be compensated for, before the weighted addition of the two signals is performed.

29. Circuit arrangement according to Claim 28, **characterized in that** the compensation for the running time differences can be carried out in a first step and aa subsequent second step, wherein, in the first step, a rough temporal approximation of the two signals occurs, and, in the second step, at least approximately, a precise temporal synchronization of the two signals occurs.

30. Circuit arrangement according to Claim 29, **characterized in that**, in the first step, an audio correlation can be carried out, in each case by low-pass filtering the audio signals of the two signal paths and comparing them to one another and making them coincide, wherein, due to a corresponding displacement in time of the associated video signals, a rough running time adaptation of the two video signals is carried out.

31. Circuit arrangement according to Claim 29 or 30, **characterized in that** the rough running time adaptation over the duration of individual image lines and preferably at approximately 50 to 100 µsec can be carried out precisely.

32. Circuit arrangement according to one of Claims 29 to 31, **characterized in that**, in the second step, a fine correlation of the two signals can be carried out, by comparing to one another the image and/or line synchronization signals of the video signals of the two signal paths and making them coincide by a displacement in time of one signal or of the two signals.

33. Circuit arrangement according to Claim 32, **characterized in that** the fine running time adaptation is selected in accordance with the pixel resolution to be represented and can be carried out precisely preferably at approximately 100 to 200 nsec.

34. Circuit arrangement according to one of Claims 23 to 33, **characterized in that** n antennas (A1 to An) can be connected by means of an antenna selector network (AW) in any desired combination to n receivers (T1 to Tn).

35. Circuit arrangement according to one of Claims 23 to 34, **characterized in that** the output signal of each receiver (T1 to Tn) can be adjusted to a constant level in each case by means of an automatic gain control (AGC1 to AGCn).

36. Circuit arrangement according to one of Claims 23 to 35, **characterized in that** each digital demodulator (DD1 to DDn) supplies a package-oriented MPEG multi-program transport stream (MPTS) to an MPTS diversity unit (MD), which selects an MPEG multi-program transport stream with fewer faulty packages and conveys it to an MPEG decoder (DK).

37. Circuit arrangement according to Claim 36, **characterized in that** each one of the n output signals of the MPTS diversity unit (MD) is demultiplexed in each case in one of n demultiplexers (DX1 to DXn) and divided by means of the program identifier contained in each transport stream package into single program streams (SPTS) and **in that** by means of a filter a program is filtered out of the multi-program transport streams.

38. Circuit arrangement according to Claim 37, **characterized in that** the output signals of the n demultiplexers (DX1 to DXn) are supplied to an SPTS, PES or ES diversity unit (SD), which selects the data stream with the best quality from single program transport streams (SPTS) package-oriented elementary streams (PES) or pure elementary streams (ES), and conveys it to the MPEG decoder (DK) and compensates for running time differences of the individual data streams.

39. Circuit arrangement according to one of Claims 36 to 38, **characterized in that** the output signal of the MPEG decoder (DK) and the output signal of the analog selector unit (A) can be combined in the diversity unit (DE) to form a playback signal in such a manner that sections of one output signal are added in a weighted manner in accordance with their quality to corresponding sections of the other output signal, wherein different running times of the two output signals are compensated for and that the added, weighted as well as run time-compensated combination signal is supplied to a display and output unit (AE).

40. Circuit arrangement according to Claim 39, **characterized in that**, in the diversity unit (DE), the video portion and the audio portion of the output signal supplied by the MPEG decoder (DK) and of the output signal supplied by the analog selector unit (A) can be evaluated separately, so that the video portion of one output signal can be combined with the audio portion of the other output signal and vice versa.

41. Circuit arrangement according to Claim 40, **characterized in that** the audio signal output with the video image output can be provided from the analog signal path, unless the sound signal provided from the digital signal path is qualitatively better in the respective time segment.

42. Circuit arrangement according to one of Claims 39 to 41, **characterized in that** the antenna selector network (AW), the receivers (T1 to Tn), the automatic gain controls (AGC1 to AGCn), the analog demodulators (AD1 to ADn), the digital demodulators (DD1 to DDn), the analog selector unit (A), the digital selector unit (D), the diversity unit (DE) as well as the display and output unit (AE) can be controlled by a central control unit (ZS).

43. Circuit arrangement according to Claim 42, **characterized in that** the MPTS diversity unit (MD), the MPTS demultiplexers (DX1 to DXn), the SPTS, PES or ES diversity unit (SD) and the MPEG decoder (DK) of the digital selector unit (D) can be controlled by the central control unit (ZS).

44. Circuit arrangement according to Claim 41 or 43, **characterized in that** the analog selector unit (A) generates a quality criterion for the analog signals and conveys it to the central control unit (ZS).

45. Circuit arrangement according to Claim 43 or 44, **characterized in that** control outputs of the central control unit (ZS) are connected to control inputs of the antenna selector network (AW), of the n receivers (T1 to Tn), of the n automatic gain controls (AGC1 to AGCn), of the n analog demodulators (AD1 to ADn), of the n digital demodulators (DD1 to DDn), of the analog selector unit (A), of the digital selector unit (D), of the diversity unit (DE) as well as of the display and output unit (AE).

46. Circuit arrangement according to Claim 23, **characterized in that** the outputs of the n digital demodulators (DD1 to DDn) are connected to n inputs of an MPTS diversity unit (MD) whose n outputs are connected to inputs of n MPTS demultiplexers (DX1 to DXn), **in that** outputs of the n demultiplexers (DX1 to DXn) are connected to n inputs of an SPTS, PES or ES diversity unit (SD) whose output is connected to an input of an MPEG decoder (DK) whose output is connected to an input of the diversity unit (DE).

47. Circuit arrangement according to Claim 46, **characterized in that** the control inputs of the MPTS diversity unit (MD), of the n demultiplexers (DX1 to DXn), of the PTS, PES or ES diversity unit (SD) and of the MPEG decoder (DK) are connected to the control outputs of the central control unit (ZS).

## Revendications

1. Procédé pour la réception par trajets multiples de signaux de télévision au moyen de plusieurs récepteurs (T1 à Tn) et d'au moins une antenne (A1 à An),
dans lequel des signaux analogiques de télévision sont reçus par plusieurs récepteurs, et la sortie du signal analogique de télévision provenant de chaque récepteur dans une voie analogique est démodulée au moyen d'un démodulateur analogique (AD1 à ADn),
**caractérisé en ce que**,
parmi les signaux analogiques démodulés, celui ayant la meilleure qualité de réception est sélectionné dans une unité de sélection analogique (A),
le signal analogique de télévision ayant la meilleure qualité de réception est numérisé, les signaux numériques de télévision sont reçus par de multiples récepteurs,
la sortie de signal numérique de télévision provenant de chaque récepteur dans une voie numérique est numériquement démodulée au moyen d'un démodulateur numérique (DD1 à DDn),
parmi les signaux numériques de télévision démodulés, celui ayant la meilleure qualité de réception est sélectionné dans une unité de sélection numérique (D),
le signal analogique de télévision numérisé ayant la meilleure qualité de réception et le signal numérique de télévision ayant la meilleure qualité de réception sont acheminés vers une unité de diversité (DE), et
le signal analogique de télévision numérisé et le signal numérique de télévision ayant la meilleure qualité de réception sont additionnés d'une manière pondérée, l'un à l'autre,
dans l'unité de diversité (DE), de sorte qu'une combinaison des deux signaux est émise.

2. Procédé selon la revendication 1, **caractérisé en ce que** l'addition pondérée des deux signaux est effectuée dans le domaine de la fréquence et/ou du temps.

3. Procédé selon la revendication 1 ou 2, **caractérisé en ce que** l'addition pondérée des deux signaux est effectuée par la combinaison, l'une avec l'autre, des parties de signal à basse fréquence provenant d'un chemin de signal (analogique ou numérique) et des parties de signal à haute fréquence provenant de l'autre chemin de signal (analogique ou numérique), ou les parties de chrominance d'un chemin de signal avec les parties de luminance de l'autre chemin de signal.

4. Procédé selon l'une des revendications 1 à 3, **caractérisé en ce qu'**à partir du chemin du signal numérique et qu'à partir du chemin de signal analogique, dans chaque cas, des signaux image et audio sont émis et ajoutés de manière pondérée dans l'unité de diversité (DE).

5. Procédé selon l'une des revendications 1 à 4, **caractérisé en ce que** l'addition pondérée est effectuée d'une manière quantisée.

6. Procédé selon l'une des revendications 1 à 5, **caractérisé en ce que** les différences de temps de fonctionnement du chemin de signal numérique et du chemin de signal analogique sont compensées avant que l'addition pondérée des deux signaux ne soit effectuée.

7. Procédé selon la revendication 6, **caractérisé en ce que** la compensation des différences de temps de fonctionnement se produit dans une première étape et dans une deuxième étape ultérieure, dans lequel, dans la première étape, une approximation temporelle brute des deux signaux se produit, et, dans la deuxième étape, au moins approximativement, une synchronisation temporelle précise entre les deux signaux se produit.

8. Procédé selon la revendication 7, **caractérisé en ce que**, dans la première étape, une corrélation audio est effectuée, dans chaque cas par filtrage passe-bas des signaux audio des deux chemins de signaux et en les comparant, l'un à l'autre, et en les faisant coïncider, dans lequel, en raison d'un déplacement temporel correspondant des signaux vidéo associés, une adaptation brute de la durée de fonctionnement des deux signaux vidéo est réalisée.

9. Procédé selon la revendication 7, **caractérisé en ce que** l'adaptation brute de la durée de fonctionnement sur la durée de plusieurs lignes d'image et de préférence à environ 50 à 100 microsecondes est réalisée avec précision.

10. Procédé selon l'une des revendications 7 à 9, **caractérisé en ce que**, dans la deuxième étape, une corrélation fine des deux signaux se produit, dans lequel l'image et/ou les signaux de synchronisation de ligne des deux chemins de signaux sont comparés entre eux et coïncidés en raison d'un déplacement temporel de l'un ou des deux signaux.

11. Procédé selon la revendication 10, **caractérisé en ce que** l'adaptation temporelle du fonctionnement fin est adaptée à une résolution de pixels devant être représentée et de préférence à au moins environ 50 à 200 nsec précisément.

12. Procédé selon l'une des revendications 1 à 11, **caractérisé en ce que** n antennes (A1 à Aln) peuvent être reliées par l'intermédiaire d'un réseau de sélection d'antenne (AW) dans une quelconque combinaison désirée à n récepteurs (T1 à Tn).

13. Procédé selon l'une des revendications 1 à 12, **caractérisé en ce que** le signal de sortie de chaque récepteur (T1 à Tn) est ajusté à un niveau constant dans chaque cas au moyen d'une commande automatique de gain (AGC1 de AGCn).

14. Procédé selon l'une des revendications 1 à 13, **caractérisé en ce que** chaque démodulateur numérique (DD1 à DDn) fournit un flux de transport multiprogramme MPEG en paquet (MPTS) à une unité de diversité MPTS (MD), qui sélectionne un flux de transport multiprogramme MPEG avec moins de paquets défectueux et le transporte à un décodeur MPEG (DK).

15. Procédé selon la revendication 14, **caractérisé en ce que** chacun des n signaux de sortie de l'unité de diversité MPTS (MD) est démultiplexé dans chaque cas dans l'un des n démultiplexeurs (DX1 à DXn) et divisé au moyen de l'identificateur de programme contenu dans chaque paquet de flux de transport en flux de programmes individuels, abréviation (SPTS), et **en ce qu'**au moyen d'un filtre un programme est filtré hors des flux de transport multiprogrammes.

16. Procédé selon la revendication 15, **caractérisé en ce que** les signaux de sortie des n démultiplexeurs (DX1 à DXn) sont transmis à un SPTS, PES ou unité de diversité ES (SD), qui sélectionne le flux de données ayant la meilleure qualité à partir de flux de transport de programme individuel (SPTS), les flux élémentaires en paquets (PES) ou les flux élémentaires pures (ES), et le transmet au décodeur MPEG (DK) et qui compense également pour les différences temporelles des flux de données individuels.

17. Procédé selon l'une des revendications 14 à 16, **caractérisé en ce que** le signal de sortie du décodeur MPEG (DK) et le signal de sortie de l'unité de sélection analogique (A) sont combinés dans l'unité de diversité (DE) pour former un signal de lecture de telle sorte que les sections d'un signal de sortie sont ajoutées d'une manière pondérée selon leur qualité aux sections correspondantes de l'autre signal de sortie, dans lequel des temps de fonctionnement différents des deux signaux de sortie sont compensés, et les signaux de combinaison ajoutés, pondérés ainsi que compensés par le temps de fonctionnement sont transmis à une unité d'affichage et de sortie (AE).

18. Procédé selon la revendication 17, **caractérisé en ce que**, dans l'unité de diversité (DE), la partie vidéo et la partie audio du signal de sortie émis par le décodeur MPEG (DK) et du signal de sortie émis par l'unité de sélection analogique (A) sont évalués séparément, de sorte que la partie vidéo d'un signal de sortie peut être combiné avec la partie audio de l'autre signal de sortie.

19. Procédé selon la revendication 18, **caractérisé en ce que** la sortie du signal audio avec la sortie de l'image vidéo est obtenue à partir du chemin de signal analogique, à moins que le signal sonore fourni à partir du chemin de signal numérique est qualitativement meilleure dans le segment de temps respectif.

20. Procédé selon l'une des revendications 17 à 19, **caractérisé en ce que** le réseau de sélection d'antenne (AW), les récepteurs (T1 à Tn), les commandes de gain automatique (AGC1 de AGCn), les démodulateurs analogiques (AD1 à ADn), les démodulateurs numériques (DD1 à DDn), l'unité analogique de sélection (A), l'unité de sélection numérique (D), l'unité de diversité (DE) ainsi que l'unité d'affichage et de sortie (AE) sont commandés par une unité de commande centrale (ZS).

21. Procédé selon la revendication 20, **caractérisé en ce que** l'unité de diversité MPTS (MD), les démultiplexeurs MPTS (DX1 à DXn), le SPTS, le PES ou l'unité de diversité ES (SD) et le décodeur MPEG (DK) de l'organe de sélection numérique (D) sont commandés par l'unité de commande centrale (ZS).

22. Procédé selon la revendication 20 ou 21, **caractérisé en ce que** l'unité de sélection analogique (A) génère un critère de qualité pour les signaux analogiques et l'achemine vers l'unité de commande centrale (ZS).

23. Circuit pour la réception par trajets multiples de signaux de télévision au moyen de plusieurs récepteurs et d'au moins une antenne,
dans lequel plusieurs récepteurs sont utilisés pour recevoir des signaux de télévision analogiques avec, dans chaque cas, des unités de traitement en aval, et
la sortie de signal analogique de télévision par chaque récepteur dans une voie analogique peut être démodulée par l'intermédiaire d'un démodulateur analogique,
**caractérisé en ce que**,
à partir des signaux analogiques de télévision démodulés, celui ayant la meilleure qualité de réception peut être sélectionné dans une unité de sélection analogique (A),
le signal de télévision analogique ayant la meilleure qualité de réception peut être numérisé dans une unité de numérisation,
plusieurs récepteurs sont utilisés pour recevoir des signaux de télévision numérique,
la sortie de signal numérique de télévision par chaque récepteur dans une voie numérique peut être démodulée numériquement par l'intermédiaire d'un démodulateur numérique (DD1 à DDn),
à partir des signaux de télévision numériques démodulés, celui ayant la meilleure qualité de réception peut être sélectionné dans une unité de sélection numérique (D),
le signal de télévision analogique numérisé ayant la meilleure qualité de réception et le signal de télévision numérique ayant la meilleure qualité de réception peuvent être transmis à une unité de diversité (DE), et
le signal analogique de télévision numérisé, ainsi que le signal numérique de télévision ayant la meilleure qualité de réception peuvent être ajoutés par une addition pondérée, l'un à l'autre, dans l'unité de diversité (DE), de sorte qu'une combinaison des deux signaux peut être émis à un dispositif de sortie (AE).

24. Ensemble de circuit selon la revendication 23, **caractérisé en ce que** l'addition pondérée des deux signaux peut être réalisée dans le domaine de fréquence et/ou de temps ou par une addition pondérée des parties de chrominance et de luminance.

25. Ensemble de circuit selon la revendication 23 ou 24, **caractérisé en ce que** l'addition pondérée des deux signaux peut être réalisée en combinant, l'une avec l'autre, les parties de signal à basse fréquence à partir d'un chemin de signal (numérique ou analogique) et les parties de signal à haute fréquence de l'autre chemin de signal (analogique ou numérique).

26. Ensemble de circuit selon l'une quelconque des revendications 23 à 25, **caractérisé en ce que**, à une sortie du chemin de signal numérique et à une sortie du chemin de signal analogique, dans chaque cas des signaux d'image et de son peuvent être pris et ajoutés d'une manière pondérée à l'unité de diversité (DE).

27. Ensemble de circuit selon l'une des revendications 23 à 26, **caractérisé en ce que** l'addition pondérée peut être réalisée d'une manière quantisée.

28. Ensemble de circuit selon l'une des revendications 23 à 27, **caractérisé en ce que** les différences de temps de fonctionnement du chemin de signal numérique et le chemin de signal analogique peuvent être compensées, avant que l'addition pondérée des deux signaux ne soit effectuée.

29. Ensemble de circuit selon la revendication 28, **caractérisé en ce que** la compensation des différences de temps de fonctionnement peut être réalisée dans une première étape et à une deuxième étape ultérieure, dans lequel, dans la première étape, une approximation temporelle brute des deux signaux se produit, et, dans la deuxième étape, au moins approximativement, une synchronisation temporelle précise des deux signaux se produit.

30. Ensemble de circuit selon la revendication 29, **caractérisé en ce que**, dans la première étape, une corrélation audio peut être réalisée, dans chaque cas par un filtrage passe-bas des signaux audio des deux chemins de signaux et en les comparant, l'un à l'autre, et en les faisant coïncider, dans lequel, en raison d'un déplacement correspondant dans le temps des signaux vidéo associés, une adaptation du temps de fonctionnement brute des deux signaux vidéo est réalisée.

31. Ensemble de circuit selon la revendication 29 ou 30, **caractérisé en ce que** l'adaptation du temps de fonctionnement brut pendant la durée de lignes d'image individuelle et de préférence à environ 50 à 100 microsecondes peut être effectuée avec précision.

32. Ensemble de circuit selon l'une quelconque des revendications 29 à 31, **caractérisé en ce que**, dans la deuxième étape, une corrélation fine des deux signaux peut être réalisée, en comparant l'un à l'autre les signaux d'image et/ou les signaux de synchronisation de ligne des signaux vidéo des deux chemins de signaux et en les faisant coïncider par un déplacement dans le temps d'un signal ou des deux signaux.

33. Ensemble de circuit selon la revendication 32, **caractérisé en ce que** l'adaptation fine du temps de fonctionnement est choisie en fonction de la résolution de pixel devant être représenté et peut être réalisée avec précision de préférence à environ 100 à 200 ns.

34. Ensemble de circuit selon l'une des revendications 23 à 33, **caractérisé en ce que** les n antennes (A1 à An) peuvent être reliées par l'intermédiaire d'un réseau de sélection d'antenne (AW) dans une quelconque combinaison désirée aux n récepteurs (T1 à Tn).

35. Ensemble de circuit selon l'une des revendications 23 à 34, **caractérisé en ce que** le signal de sortie de chaque récepteur (T1 à Tn) peut être ajusté à un niveau constant dans chaque cas au moyen d'une commande automatique de gain (AGC1 de AGCn).

36. Ensemble de circuit selon l'une des revendications 23 à 35, **caractérisé en ce que** chaque démodulateur numérique (DD1 à DDn) fournit un flux de transport multiprogramme MPEG en paquet (MPTS) à une unité de diversité MPTS (MD), qui sélectionne un flux de transport multiprogramme MPEG avec moins de paquets défectueux et l'achemine vers un décodeur MPEG (DK).

37. Ensemble de circuit selon la revendication 36, **caractérisé en ce que** chacun des n signaux de sortie de l'unité de diversité MPTS (MD) est démultiplexé dans chaque cas dans l'un des n démultiplexeurs (DX1 à DXn) et divisé au moyen de l'identificateur de programme contenu dans chaque paquet de flux de transport en flux de programme individuels (SPTS) et **en ce qu'**au moyen d'un filtre un programme est filtré hors des flux de transport multiprogrammes.

38. Ensemble de circuit selon la revendication 37, **caractérisé en ce que** les signaux de sortie des n démultiplexeurs (DX1 à DXn) sont acheminés vers un SPTS, un PES ou une unité de diversité ES (SD), qui sélectionne le flux de données ayant la meilleure qualité parmi les flux de transport de programme individuel (SPTS), les flux élémentaires en paquets (PES) ou les flux élémentaires pures (ES), et l'achemine au décodeur MPEG (DK) et compense les différences de temps de fonctionnement des flux de données individuels.

39. Ensemble de circuit selon l'une des revendications 36 à 38, **caractérisé en ce que** le signal de sortie du décodeur MPEG (DK) et du signal de sortie de l'unité de sélection analogique (A) peut être combiné dans l'unité de diversité (DE) pour former un signal de lecture de sorte que les sections d'un signal de sortie sont ajoutées d'une manière pondérée en fonction de leur qualité aux sections correspondantes de l'autre signal de sortie, dans lequel les différents temps de fonctionnement des deux signaux de sortie sont compensés et que le signal de combinaison ajouté, pondéré ainsi que compensé pour le temps de fonctionnement est acheminé vers une unité d'affichage et de sortie (AE).

40. Ensemble de circuit selon la revendication 39, **caractérisé en ce que**, dans l'unité de diversité (DE), la partie vidéo et la partie audio du signal de sortie fourni par le décodeur MPEG (DK) et du signal de sortie fourni par l'unité de sélection analogique (A) peuvent être évaluées séparément, de sorte que la partie vidéo d'un signal de sortie peut être combinée avec la partie audio de l'autre signal de sortie et vice versa.

41. Ensemble de circuit selon la revendication 40, **caractérisé en ce que** la sortie de signal audio avec la sortie de l'image vidéo peut être obtenue à partir du chemin de signal analogique, à moins que le signal sonore obtenu à partir du chemin de signal numérique soit qualitativement meilleure dans le segment de temps respectif.

42. Ensemble de circuit selon l'une des revendications 39 à 41, **caractérisé en ce que** le réseau de sélection d'antenne (AW), les récepteurs (T1 à Tn), les commandes de gain automatique (AGC1 de AGCn), les démodulateurs analogiques (AD1 à ADn), les démodulateurs numériques (DD1 à DDn), l'unité analogique de sélection (A), l'unité de sélection numérique (D), l'unité de diversité (DE) ainsi que l'unité d'affichage et de sortie (AE) peuvent être commandés par une unité de commande centrale (ZS).

43. Ensemble de circuit selon la revendication 42, **caractérisé en ce que** l'unité de diversité MPTS (MD), les démultiplexeurs MPTS (DX1 à DXn), le SPTS, le PES ou l'unité de diversité ES (SD) et le décodeur MPEG (DK) de l'unité de sélection numérique (D) peuvent être commandés par l'unité de commande centrale (ZS).

44. Ensemble de circuit selon la revendication 41 ou 43, **caractérisé en ce que** l'unité de sélection analogique (A) génère un critère de qualité pour les signaux analogiques et l'achemine à l'unité de commande centrale (ZS).

45. Ensemble de circuit selon la revendication 43 ou 44, **caractérisé en ce que** des sorties de commande de l'unité de commande centrale (ZS) sont reliées à des entrées de commande du réseau de sélection d'antenne (AW), des n récepteurs (T1 à Tn), des n contrôles automatique de gain (AGC1 de AGCn), des n démodulateurs analogiques (AD1 à ADn), des n démodulateurs numériques (DD1 à DDn), de l'unité de sélection analogique (A), de l'unité de sélection numérique (D), de l'unité de diversité (DE), ainsi que de l'afficheur et l'unité de sortie (AE).

46. Ensemble de circuit selon la revendication 23, **caractérisé en ce que** les sorties des n démodulateurs numériques (DD1 à DDn) sont connectées aux n entrées d'une unité de diversité MPTS (MD) dont les n sorties sont connectées aux entrées des n démultiplexeurs MPTS (DX1 à DXn), **en ce que** les sorties des n démultiplexeurs (DX1 à DXn) sont connectées aux n entrées d'un SPTS, d'un PES ou d'unité de diversité ES (SD) dont la sortie est connectée à une entrée d'un décodeur MPEG (DK) dont la sortie est connectée à une entrée de l'unité de diversité (DE).

47. Ensemble de circuit selon la revendication 46, **caractérisé en ce que** les entrées commandées de l'unité de diversité MPTS (MD), des n démultiplexeurs (DX1 à DXn), des PTS, PES ou de l'unité de diversité ES (SD) et du décodeur MPEG (DK) sont connectées à des sorties commandées de l'unité de commande centrale (ZS).
